# EUROPÄISCHE PATENTSCHRIFT

(11) **EP 2 895 368 B1**
(45) Veröffentlichungstag und Bekanntmachung des Hinweises auf die Patenterteilung: **01.01.2020**
(21) Anmeldenummer: 12780451.6
(22) Anmeldetag: 12.10.2012
(51) Int. Cl.: B61C 3/00, B60L 5/19

(54) **SCHIENENFAHRZEUG MIT AKUSTISCH OPTIMIERTER BEFESTIGUNG EINER STROMABNEHMEREINRICHTUNG**
RAIL VEHICLE HAVING ACOUSTICALLY OPTIMIZED ATTACHMENT OF A CURRENT COLLECTOR DEVICE
VÉHICULE FERROVIAIRE DOTÉ D'UNE FIXATION, ACOUSTIQUEMENT OPTIMISÉE, D'UN DISPOSITIF DE CONSOMMATION ÉLECTRIQUE

(30) Priorität: 12.09.2012 WO PCT/EP2012/003830
(43) Veröffentlichungstag der Anmeldung: 22.07.2015
(73) Patentinhaber: Bombardier Transportation GmbH, 10785 Berlin (DE)
(72) Erfinder: THOß, Erik, 14612 Falkensee (DE); BIALOSCEK, André, 14482 Potsdam (DE); KOHRS, Torsten, 13353 Berlin (DE)
(74) Vertreter: Cohausz & Florack
(86) Internationale Anmeldenummer: PCT/EP2012/070317
(87) Internationale Veröffentlichungsnummer: WO 2014/040656

(56) Entgegenhaltungen:
- DE-A1- 19 856 636
- FR-A1- 2 880 604
- JP-A- 2006 159 938
- JP-A- 2009 179 191
- US-A- 4 567 335

## Beschreibung

### HINTERGRUND DER ERFINDUNG

Die vorliegende Erfindung betrifft ein Schienenfahrzeug, insbesondere für den Hochgeschwindigkeitsverkehr, mit einem Wagenkasten, der einem Innenraum aufweist und eine Fahrzeuglängsrichtung, eine Fahrzeugquerrichtung sowie eine Fahrzeughöhenrichtung definiert, und einer Stromabnehmereinrichtung zur Montage in einem Dachbereich des Wagenkastens. Die Stromabnehmereinrichtung weist wenigstens eine elektrische Isolatoreinrichtung auf, über welche die Stromabnehmereinrichtung auf einer Dachstruktur des Wagenkastens abgestützt ist. Die vorliegende Erfindung betrifft weiterhin eine Schwingungsreduktionseinrichtung, über welche der Eintrag von Schall, der durch die Stromabnehmereinrichtung induziert wird, in den Innenraum des Wagenkastens reduziert wird.

Bei solchen modernen, aus einer Oberleitung mit elektrischer Energie versorgten Schienenfahrzeugen, welche typischerweise mit vergleichsweise hohen Nennbetriebsgeschwindigkeiten verkehren, besteht in der Regel das Problem, dass eine aktive Stromabnehmereinrichtung sowohl durch die an ihr wirkenden aerodynamischen Lasten als auch durch die Kontaktlasten mit der Oberleitung zu Schwingungen angeregt werden. Diese Schwingungen werden zum einen über die Struktur der Stromabnehmereinrichtung (als so genannter Körperschall) in die stützende Dachstruktur des Wagenkastens eingeleitet, führen mithin also zu Vibrationen in der Dachstruktur. Zudem bewirken die Schwingungen der Stromabnehmereinrichtung eine unmittelbare Emission von Schallwellen an der Oberfläche der Stromabnehmereinrichtung, welche sich (als so genannter Luftschall) in der umgebenden Atmosphäre ausbreiten. Ein Teil dieser Schallwellen trifft wiederum auf die angrenzende Dachstruktur des Wagenkastens und regt diese ebenfalls zu Schwingungen an. Die auf diesen beiden Wegen induzierten Schwingungen der Dachstruktur breiten sich wiederum als Körperschall in der Fahrzeugstruktur aus und führen letztlich zu einer mehr oder weniger starken Schallimmission in den Innenraum des Fahrzeugs.

Die Strom führenden Bauteile der Stromabnehmereinrichtung müssen typischerweise einen bestimmten Mindestabstand zur angrenzenden Wagenkastenstruktur aufweisen, um einen Spannungsüberschlag auf die Wagenkastenstruktur sicher zu verhindern. Hierzu umfasst die Isolatoreinrichtung der Stromabnehmereinrichtung typischerweise mehrere Isolatoren entsprechender Höhe, über welche die Strom führenden Bauteile auf der Dachstruktur des Wagenkastens abgestützt und von dieser elektrisch isoliert sind. Diese Gestaltung bedingt jedoch, dass die Stromabnehmereinrichtung auch im eingefahrenen Ruhezustand eine vergleichsweise große Bauhöhe aufweist.

In der Regel bilden hierbei ein im Bereich der Längsmittenebene des Wagenkastens angeordneter mittiger Isolator und zwei in der Fahrzeugquerrichtung fluchtende, zu beiden Seiten der Längsmittenebene angeordnete seitliche Isolatoren eine Dreipunktabstützung. Die beiden seitlichen Isolatoren stützen dabei unter anderem das um die Fahrzeuglängsachse auf die Stromabnehmereinrichtung wirkende oszillierende Drehmoment ab, welches aus der Kontaktkraft resultiert, die in dem (aus Gründen einer möglichst gleichmäßigen Abnutzung der Schleifleiste) in der Fahrzeugquerrichtung hin und her wandernden Kontaktpunkt der Schleifleiste mit der Oberleitung wirkt. Der Abstand der seitlichen Isolatoren in der Fahrzeugquerrichtung ist in der Regel möglichst gering gewählt, um die Angriffsfläche für den Fahrtwind und damit den aerodynamischen Widerstand der Stromabnehmereinrichtung so gering wie möglich zu halten. Schienenfahrzeuge mit derartigen Stromabnehmereinrichtungen, wie sie auch im Oberbegriff des Anspruchs 1 beschrieben sind, sind z. B. aus dem Dokument FR-A-2 880 604 bekannt.

Um die aerodynamischen Lasten auf die Stromabnehmereinrichtung und den aerodynamischen Widerstand des Fahrzeugs weiter zu reduzieren, ist die Stromabnehmereinrichtung häufig in einer Vertiefung im Dach des Wagenkastens angeordnet. Dies hat jedoch den Nachteil, dass der Bereich der mechanischen Anbindung der Stromabnehmereinrichtung an die Dachstruktur näher an den Innenraum des Fahrzeugs rückt, wodurch sich nicht zuletzt die akustischen Probleme im Innenraum verstärken, welche durch den Schalleintrag bedingt sind, der durch die Stromabnehmereinrichtung induziert wird.

### KURZE BESCHREIBUNG DER ERFINDUNG

Der vorliegenden Erfindung liegt daher die Aufgabe zu Grunde, ein Fahrzeug sowie eine Schwingungsreduktionseinrichtung der eingangs genannten Art zur Verfügung zu stellen, welche die oben genannten Nachteile nicht oder zumindest in geringerem Maße mit sich bringt und insbesondere auf einfache Weise im Betrieb einen möglichst geringen Strömungswiderstand des Fahrzeugs bei möglichst geringer Geräuschimmission in den Innenraum des Fahrzeugs ermöglicht.

Die vorliegende Erfindung löst diese Aufgabe ausgehend von einer Fahrzeugkomponente gemäß dem Oberbegriff des Anspruchs 1 durch die im kennzeichnenden Teil des Anspruchs 1 angegebenen Merkmale.

Der vorliegenden Erfindung liegt die technische Lehre zu Grunde, dass man auf einfache Weise im Betrieb einen möglichst geringen Strömungswiderstand des Fahrzeugs bei möglichst geringer Geräuschimmission in den Innenraum des Fahrzeugs erzielen kann, wenn zwischen der Isolatoreinrichtung und der Dachstruktur eine Schwingungsreduktionseinrichtung angeordnet wird, die in der Fahrzeugquerrichtung und/oder der Fahrzeuglängsrichtung über die Isolatoreinrichtung hinausragt. Durch dieses seitliche Überragen der Isolatoreinrichtung durch die zwischen der Isolatoreinrichtung und der Dachstruktur angeordnete Schwingungsreduktionseinrichtung können in vorteilhafter Weise unterschiedliche Effekte erzielt werden, welche jeweils einen positiven Einfluss auf den Eintrag von Schwingungen in die Wagenkastenstruktur und damit letztlich die Schallimmission in den Innenraum des Fahrzeugs haben.

So kann die Schwingungsreduktionseinrichtung über eine Körperschallreduktionseinrichtung zum einen die Eigenschaften im Zusammenhang mit der Einleitung von Körperschall in die Struktur des Wagenkastens verbessern, indem die Isolatoreinrichtung beispielsweise über eine seitlich überstehende Trägereinrichtung der Schwingungsreduktionseinrichtung auf der Dachstruktur abgestützt wird. Hierdurch ist es möglich, die Stützbreite bei der Abstützung der Stromabnehmereinrichtung zu erhöhen, sodass beispielsweise bei der Abstützung von Drehmomenten um die Fahrzeuglängsachse geringere, die Wagenkastenstruktur anregende Stützkräfte und damit letztlich geringere Schwingungsamplituden erzielt werden.

Zudem verlagert eine die Isolatoreinrichtung in der Fahrzeugquerrichtung überragende Trägereinrichtung die Kraftangriffspunkte der Stützkräfte aus dem primär senkrecht zur Fahrzeughöhenrichtung ausgerichteten Bereich der Dachstruktur näher an den Bereich der primär in der Fahrzeughöhenrichtung verlaufenden Seitenwände des Wagenkastens. Hierdurch wird erreicht, dass die in die Wandstruktur des Wagenkastens eingeleiteten Stützkräfte nicht mehr primär senkrecht zur Wandebene in die Dachstruktur eingeleitet werden, sondern primär in der Ebene der seitlichen Wandstruktur wirken. Dies ist insoweit von Vorteil, als die Anregung der stützenden Wandstrukturen zu Biegeschwingungen reduziert wird, die unter akustischen Gesichtspunkten besonders kritisch sind.

Zum anderen kann die Schwingungsreduktionseinrichtung über eine Luftschallreduktionseinrichtung die Eigenschaften im Zusammenhang mit der Einleitung von Luftschall in die Struktur des Wagenkastens verbessern, indem beispielsweise zwischen der Isolatoreinrichtung und der Dachstruktur eine seitlich überstehende Abschirmeinrichtung vorgesehen wird, welche die Dachstruktur großflächig gegen Schallwellen abschirmt, welche von der Stromabnehmereinrichtung ausgehen. Auch hiermit lässt sich die Schwingungsanregung der Dachstruktur und damit die Schallemission in den Innenraum des Fahrzeugs erheblich reduzieren.

Es hat sich gezeigt, dass die mit einer solchen Schwingungsreduktionseinrichtung erzielbare Reduktion der Schallimmission in den Fahrzeuginnenraum bei weitem die Nachteile überwiegt, welche aus dem für diese Komponenten erforderlichen zusätzlichen Bauraum resultieren. Soll das Niveau einer in einer Vertiefung im Wagenkasten angeordneten Stromabnehmereinrichtung beispielsweise nicht in der Fahrzeughöhenrichtung angehoben werden, so kann einfach die Tiefe der Vertiefung entsprechend vergrößert werden. Hierdurch rückt die Anbindung der Stromabnehmereinrichtung zwar näher an den Innenraum des Fahrzeugs. Die hiermit einhergehenden negativen Effekte im Hinblick auf die Schallimmission in den Fahrzeuginnenraum werden jedoch bei weitem durch die mit der Schwingungsreduktionseinrichtung erzielbare Reduktion der Schallimmission kompensiert.

Gemäß einem Aspekt betrifft die vorliegende Erfindung daher ein Schienenfahrzeug, insbesondere für den Hochgeschwindigkeitsverkehr, mit einem Wagenkasten, der einem Innenraum aufweist und eine Fahrzeuglängsrichtung, eine Fahrzeugquerrichtung sowie eine Fahrzeughöhenrichtung definiert, und einer Stromabnehmereinrichtung zur Montage in einem Dachbereich des Wagenkastens. Die Stromabnehmereinrichtung weist wenigstens eine elektrische Isolatoreinrichtung auf, über welche die Stromabnehmereinrichtung auf einer Dachstruktur des Wagenkastens abgestützt ist. Zwischen der Isolatoreinrichtung und der Dachstruktur ist eine Schwingungsreduktionseinrichtung angeordnet, die in der Fahrzeugquerrichtung und/oder der Fahrzeuglängsrichtung über die Isolatoreinrichtung hinausragt, wobei die Schwingungsreduktionseinrichtung zur Geräuschreduktion in dem Innenraum dazu ausgebildet ist, einen von der Stromabnehmereinrichtung induzierten Eintrag von Schwingungen in die Dachstruktur zu reduzieren.

Die Schwingungsreduktionseinrichtung kann in Abhängigkeit von den geometrischen Gegebenheiten des Wagenkastens grundsätzlich beliebige geeignete Abmessungen aufweisen, über welche die oben beschriebenen Effekte einzeln oder in Kombination erzielt werden können. Ist die Schwingungsreduktionseinrichtung beispielsweise in einer Vertiefung des Wagenkastens angeordnet, so erstreckt sie sich (in der Fahrzeuglängsrichtung und/oder der Fahrzeugquerrichtung) bevorzugt im Wesentlichen bis in den Bereich der Begrenzungswände der Vertiefung.

Vorzugsweise definiert die Isolatoreinrichtung eine maximale Stützbreite in der Fahrzeugquerrichtung, wobei die Schwingungsreduktionseinrichtung in der Fahrzeugquerrichtung dann eine maximale Breitenabmessung aufweist, die größer ist als die maximale Stützbreite. Bevorzugt ist die maximale Breitenabmessung der Schwingungsreduktionseinrichtung möglichst groß, um beispielsweise die Kraftangriffspunkte der Stützkräfte möglichst nahe an den Bereich der primär in der Fahrzeughöhenrichtung verlaufenden, in der primären Anregungsrichtung (d. h. der primärem Richtung der Schwingungsanregung durch die Stützkräfte) steifen Seitenwände des Wagenkastens zu verlagern. Bevorzugt beträgt die maximale Breitenabmessung 105% bis 200% der maximalen Stützbreite, vorzugsweise 110% bis 170% der maximalen Stützbreite, weiter vorzugsweise 120% bis 150% der maximalen Stützbreite. Hiermit lassen sich sowohl im Zusammenhang mit einer Körperschallreduktionseinrichtung als auch einer Luftschallreduktionseinrichtung besonders günstige Konfigurationen erzielen.

Zusätzlich oder alternativ definiert die Isolatoreinrichtung eine maximale Stützlänge in der Fahrzeuglängsrichtung, während die Schwingungsreduktionseinrichtung in der Fahrzeuglängsrichtung eine maximale Längenabmessung aufweist, die größer ist als die maximale Stützlänge. Bevorzugt beträgt hier die maximale Längenabmessung 105% bis 500% der maximalen Stützlänge, vorzugsweise 150% bis 450% der maximalen Stützlänge, weiter vorzugsweise 300% bis 400% der maximalen Stützlänge. Auch hiermit lassen sich sowohl im Zusammenhang mit einer Körperschallreduktionseinrichtung als auch einer Luftschallreduktionseinrichtung besonders günstige Konfigurationen erzielen.

Das Frequenzspektrum, in dem die Schwingungsreduktionseinrichtung eine wirksame Geräuschreduktion erzeugt, kann in vorteilhafter Weise auf die im Innenraum als störend empfundenen Frequenzen und den jeweils im Innenraum generierten Schalldruck abgestimmt werden. So können Frequenzen, die im Innenraum zu erheblichen Resonanzen und damit zu einem hohen Schalldruck führen, gezielt reduziert bzw. gedämpft werden. Mithin wird also bevorzugt wenigstens eine durch die Schwingungsreduktionseinrichtung gedämpfte Frequenz in Abhängigkeit von der Gestaltung des Wagenkastens, insbesondere der Struktur des Wagenkastens, gewählt. Dies lässt sich insbesondere durch eine geeignete Wahl der Dämpfungseigenschaften und/oder Anordnung und/oder Gestaltung der Schwingungsreduktionseinrichtung, insbesondere einzelner dämpfender Abschnitte, erzielen. Vorzugsweise ist die Schwingungsreduktionseinrichtung dazu ausgebildet, einen von der Stromabnehmereinrichtung induzierten Eintrag von Schwingungen in einem Frequenzbereich von 10 Hz bis 1000 Hz, vorzugsweise von 20 Hz bis 800 Hz, weiter vorzugsweise von 100 Hz bis 800 Hz, zu dämpfen, da hiermit, insbesondere im Hochgeschwindigkeitsverkehr oberhalb von 250 km/h, eine besonders wirkungsvolle Geräuschreduktion erzielt werden kann.

Bei bevorzugten Varianten der Erfindung weist die Schwingungsreduktionseinrichtung wie erwähnt eine Körperschallreduktionseinrichtung auf, die dazu ausgebildet ist, einen von der Stromabnehmereinrichtung induzierten Eintrag von Körperschall in die Dachstruktur zu reduzieren. Zusätzlich oder alternativ kann die Schwingungsreduktionseinrichtung eine Luftschallreduktionseinrichtung aufweisen, die dazu ausgebildet ist, einen von der Stromabnehmereinrichtung induzierten Eintrag von Luftschall in die Dachstruktur zu reduzieren. Durch beide Maßnahmen lassen sich wie erwähnt erhebliche Reduktionen der Schallimmission in den Fahrzeuginnenraum erzielen.

Bei bevorzugten Varianten der Erfindung umfasst die Schwingungsreduktionseinrichtung als Körperschallreduktionseinrichtung eine Trägereinrichtung, wobei die Isolatoreinrichtung in wenigstens einem Isolatoranschlussbereich auf der Trägereinrichtung abgestützt ist und die Trägereinrichtung über wenigstens eine Dachanschlusseinrichtung, insbesondere eine Dachmontageschiene, in wenigstens einem Dachanschlussbereich mit der Dachstruktur des Wagenkastens verbunden ist. Die Trägereinrichtung ragt bevorzugt in der Fahrzeugquerrichtung und/oder der Fahrzeuglängsrichtung über die Isolatoreinrichtung hinaus, wodurch sich der Betrag der Stützkräfte reduziert. Zusätzlich oder alternativ kann der Dachanschlussbereich in der Fahrzeugquerrichtung weiter von einer Längsmittenebene des Wagenkastens entfernt sein als ein angrenzender Isolatoranschlussbereich. Hierdurch kann eine vorteilhafte Verlagerung der mechanischen Anbindung der Stromabnehmereinrichtung an die Dachstruktur des Wagenkastens nach außen hin zu den Seitenwänden der Wagenkastenstruktur erzielt werden.

Die Trägereinrichtung kann an mehreren Stellen, gegebenenfalls sogar durchgängig, mit der Dachstruktur verbunden sein. Mithin können also insbesondere in der Fahrzeugquerrichtung mehr als zwei Verbindungspunkte mit der Dachstruktur vorgesehen sein. Vorzugsweise sind lediglich zwei Dachanschlussbereiche vorgesehen. Bei weiteren Varianten der Erfindung ist außerhalb des Dachanschlussbereichs in der Fahrzeughöhenrichtung ein erster Spalt zwischen der Trägereinrichtung und der Dachstruktur ausgebildet. Hierdurch wird eine unmittelbare mechanische Anregung der Dachstruktur außerhalb des jeweiligen Dachanschlussbereichs verhindert.

Grundsätzlich kann der erste Spalt beliebig groß gewählt werden, wobei die Spalthöhe in der Fahrzeughöhenrichtung vorzugsweise so gewählt ist, dass unter sämtlichen im Normalbetrieb zu erwartenden Lasten (und daraus resultierenden Deformationen der Trägereinrichtung) kein Kontakt zwischen der Trägereinrichtung und der Dachstruktur in diesem Bereich auftritt. Bevorzugt weist der erste Spalt in der Fahrzeughöhenrichtung eine erste Spalthöhe aufweist, die 2 mm bis 20 mm, vorzugsweise 5 mm bis 15 mm beträgt, weiter vorzugsweise 8 mm bis 12 mm, beträgt. Hiermit lassen sich in vorteilhafter Weise vergleichsweise niedrig bauende Konfigurationen erzielen.

Der erste Spalt kann grundsätzlich eine beliebige Abmessung in der Fahrzeugquerrichtung aufweisen. Bevorzugt weist der erste Spalt in der Fahrzeugquerrichtung eine erste Spaltbreite auf, die 40% bis 98%, vorzugsweise 60% bis 98%, weiter vorzugsweise 80% bis 98%, einer maximalen Querabmessung der Trägereinrichtung in der Fahrzeugquerrichtung beträgt.

Der erste Spalt kann grundsätzlich ganz oder teilweise mit einem oder mehreren Vibrationen dämmenden und/oder dämpfenden Materialien bzw. Elementen ausgefüllt sein. Vorzugsweise ist der erste Spalt als Luftspalt ausgebildet, da sich hiermit besonders einfach zu realisierende Konfigurationen ergeben.

Die Trägereinrichtung kann grundsätzlich auf beliebige geeignete Weise gestaltet sein, sofern sie eine ausreichende Steifigkeit und Festigkeit zur Abstützung der Lasten der Stromabnehmereinrichtung aufweist. Vorzugsweise umfasst die Trägereinrichtung wenigstens einen Trägerrahmen, der den Dachanschlussbereich und den Isolatoranschlussbereich ausbildet, da hiermit besonders leichte aber dennoch ausreichend steife Gestaltungen erzielt werden können.

Der Trägerrahmen kann grundsätzlich beliebige Gestaltung aufweisen. Bei bevorzugten, weil einfach zu realisierenden Varianten ist der Trägerrahmen im Wesentlichen leiterförmig ausgebildet.

Bei besonders einfach gestalteten Ausführungsformen weist der Trägerrahmen in der Fahrzeugquerrichtung zwei seitliche Enden auf, an denen jeweils ein Dachanschlussbereich ausgebildet ist. Bevorzugt bildet der Trägerrahmen in der Fahrzeugquerrichtung in einem Mittenbereich den Isolatoranschlussbereich aus.

Der Trägerrahmen kann grundsätzlich aus beliebigen geeigneten Komponenten aufgebaut sein. Beispiel einem oder mehreren plattenförmigen Elementen gestaltet sein. Vorzugsweise umfasst der Trägerrahmen eine Mehrzahl von Profilelementen, insbesondere Hohlprofilelemente, da hiermit besonders leicht bauende und steife Gestaltungen erzielt werden können.

Für den Trägerrahmen können grundsätzlich beliebige geeignete Materialien verwendet werden. Insbesondere kann für den Trägerrahmen ein Material verwendet werden, weiches dem Material der Dachstruktur entspricht oder ähnelt. So kann beispielsweise ein Material verwendet werden, das Aluminium umfasst, wodurch eine besonders leichte und steife Gestaltung erzielt wird. Besonders günstige Eigenschaften hinsichtlich der Schwingungsreduzierung ergeben sich weiterhin bei Varianten, bei denen der Trägerrahmen aus wenigstens einem Material aufgebaut ist, das Stahl umfasst.

Die Trägereinrichtung kann grundsätzlich als im Wesentlichen starres Bauteil gestaltet sein. Vorzugsweise umfasst die Trägereinrichtung jedoch wenigstens ein Schwingungsdämpfungselement bzw. Schwingungsreduktionselement, welches dazu ausgebildet ist, einen von der Stromabnehmereinrichtung induzierten Eintrag von Schwingungen in die Dachstruktur zu reduzieren.

Das wenigstens eine Schwingungsreduktionselement kann hierbei nach Art eines Dämpfungselements und/oder eines Dämmungselements und/oder einer so genannten Blockiermasse gestaltet sein, welches bzw. welche das Schwingungsverhalten der Trägereinrichtung (insbesondere deren Eigenfrequenzen und/oder Eigenformen und/oder Amplituden der Eigenformen) entsprechend modifiziert, um den Eintrag von Schwingungen in die Dachstruktur in den relevanten Frequenzbereichen zu reduzieren. Hierzu kann das Schwingungsreduktionselement außerhalb des unmittelbaren Kraftflusses zwischen der Isolatoreinrichtung und der Dachstruktur des Wagenkastens an der Trägereinrichtung angeordnet sein und beispielsweise lediglich dämpfend und/oder dämmend und/oder das Schwingungsverhalten modifizierend auf die (zu Schwingungen angeregte) Trägereinrichtung wirken. Besonders vorteilhaft ist es, wenn ein solches Schwingungsreduktionselement im Isolatoranschlussbereich angeordnet ist, da an dieser Krafteinleitungsstelle in die Trägereinrichtung in der Regel besonders hohe (typischerweise maximale) Schwingungsamplituden zu erwarten sind und das Schwingungsreduktionselement dort eine besonders gute Dämpfungswirkung bzw. Modifikationswirkung entfalten kann.

Zusätzlich oder alternativ kann das wenigstens eine Schwingungsreduktionselement in einen Kraftfluss zwischen der Isolatoreinrichtung und der Dachstruktur des Wagenkastens geschaltet sein. Bei bestimmten Varianten der Erfindung ist das Schwingungsreduktionselement im Dachanschlussbereich angeordnet. Zusätzlich oder alternativ kann ein Schwingungsreduktionselement im Isolatoranschlussbereich angeordnet sein.

Das Schwingungsreduktionselement kann grundsätzlich auf beliebige geeignete Weise aus einem oder mehreren Materialien aufgebaut sein, um die gewünschte dämpfende Wirkung und/oder dämmende Wirkung und/oder das Schwingungsverhalten modifizierende Wirkung zu erzielen. Vorzugsweise ist das Schwingungsreduktionselement aus wenigstens einem Material aufgebaut, das einen Kunststoff, insbesondere Gummi, umfasst.

Bei weiteren Varianten des erfindungsgemäßen Schienenfahrzeugs umfasst die Schwingungsreduktionseinrichtung als Luftschallreduktionseinrichtung eine Abschirmeinrichtung für von der Stromabnehmereinrichtung induzierten Luftschall, wobei

die Abschirmeinrichtung zwischen der Isolatoreinrichtung und der Dachstruktur des Wagenkastens angeordnet ist. Hierbei kann die Abschirmeinrichtung insbesondere zwischen der Isolatoreinrichtung und einer Trägereinrichtung zur Montage der Stromabnehmereinrichtung an der Dachstruktur angeordnet sein. Vorzugsweise ragt die Abschirmeinrichtung in der Fahrzeugquerrichtung und/oder der Fahrzeuglängsrichtung über die Isolatoreinrichtung hinaus, um eine möglichst großflächige Abschirmung der Dachstruktur gegen den Luftschall zu erzielen.

Die Abschirmeinrichtung kann grundsätzlich auf beliebige geeignete Weise an einem oder mehreren Punkten mit der Dachstruktur verbunden sein. Vorzugsweise ist die Abschirmeinrichtung über eine Mehrzahl von Schwingungsentkopplungselementen auf der Dachstruktur abgestützt. Dies ist insbesondere bei Fahrzeugen für den Hochgeschwindigkeitsverkehr von Vorteil, bei denen im Betrieb zum Teil erhebliche singuläre Druckschwankungen bzw. Druckspitzen (z. B. bei Zugbegegnungen, Tunneleinfahrten etc.) auftreten. Die schwingungsentkoppelte Abstützung sichert die Abschirmeinrichtung in vorteilhafter Weise gegen übermäßige Deformation bei solchen singulären Druckereignissen, ohne die Abschirmeigenschaften gegen den von der Stromabnehmereinrichtung induzierten Luftschall erheblich zu beeinträchtigen.

Die Eigenfrequenz der Abschirmeinrichtung ist ebenso wie die Eigenfrequenz der Schwingungsentkopplungselemente bevorzugt möglichst weitgehend auf das zu erwartende Frequenzspektrum des von der Stromabnehmereinrichtung induzierten Luftschalls abgestimmt, um eine gute Abschirmwirkung zu erzielen. So ist die Abschirmeinrichtung insbesondere so gestaltet, dass sie in einem Frequenzbereich von 20 Hz bis 800 Hz ein gutes Dämpfungsverhalten, insbesondere keine ausgeprägten Eigenfrequenzen, aufweist.

Die Abschirmeinrichtung kann grundsätzlich auf beliebige geeignete Weise aus einer oder mehreren Komponenten aufgebaut sein. Sie umfasst bevorzugt ein im Wesentlichen plattenförmiges, insbesondere im Wesentlichen ebenes, Abschirmelement, welches einer Oberseite der Dachstruktur unter Ausbildung eines zweiten Spalts zugeordnet ist. Der zweite Spalt gewährleistet hierbei unter anderem, dass sich das Abschirmelement möglichst frei deformieren kann, sodass es neben der Reflektion der Schallwellen auch einen Teil der Schallenergie aufnehmen und durch die daraus resultierende Deformation zumindest einen Teil in Form von innerer Reibung dissipieren kann.

Der zweite Spalt kann hierzu grundsätzlich beliebige geeignete Abmessungen haben, die insbesondere auf die Schwingungseigenschaften der Abschirmeinrichtung abgestimmt sind, um die beschriebene Energiedissipation zu ermöglichen. Prinzipiell sollte der zweite Spalt so groß wie möglich gewählt werden, um im Bereich tiefer Frequenzen eine möglichst hohe Schalldämmung erzielen zu können. Bevorzugt weist der zweite Spalt in der Fahrzeughöhenrichtung eine zweite Spalthöhe auf, die 40 mm bis 120 mm, vorzugsweise 60 mm bis 100 mm, weiter vorzugsweise 70 mm bis 90 mm, beträgt.

Der zweite Spalt kann (wie schon der erste Spalt) grundsätzlich ganz oder teilweise mit einem oder mehreren Vibrationen dämmenden bzw. dämpfenden Materialien ausgefüllt sein, um mögliche Resonanzen im zweiten Spalt zu unterdrücken. Beispielsweise kann es sich bei dem Vibrationen dämmenden bzw. dämpfenden Material um Mineralwolle, mikroperforierte Paneele, so genannte Akustikpaneele, eine so genannte Schwerschicht, beispielsweise aus Ethylen-Propylen-Dien-Kautschuk bzw. Ethylen-Propylen-Dien-Monomer (EPDM) oder dergleichen handeln. Bei weiteren Varianten der Erfindung ist der zweite Spalt als Luftspalt ausgebildet, da sich hiermit besonders einfach zu realisierende Konfigurationen ergeben.

Die Abschirmeinrichtung kann grundsätzlich nur aus einem plattenförmigen Abschirmelement aufgebaut sein. Vorzugsweise ist das Abschirmelement jedoch mit entsprechenden mechanischen Verstärkungseinrichtungen versehen, um seine Formstabilität im Betrieb zu erhöhen. Als Verstärkungseinrichtungen können grundsätzlich beliebige geeignete Elemente, wie beispielsweise Rippen, Rinnen, Sicken etc. in beliebiger geeigneter Anordnung vorgesehen sein. Besonders robuste Gestaltungen ergeben sich, wenn die Abschirmeinrichtung im Wesentlichen wannenförmig mit einem umlaufend an das Abschirmelement angrenzenden, insbesondere in der Fahrzeughöhenrichtung nach oben weisenden, Randbereich ausgebildet ist.

Für das Abschirmelement können grundsätzlich beliebige geeignete Materialien verwendet werden. Insbesondere kann für das Abschirmelement ein Material verwendet werden, welches dem Material der Dachstruktur entspricht oder ähnelt. Besonders günstige Eigenschaften hinsichtlich der Schwingungsreduzierung ergeben sich bei Varianten, bei denen das Abschirmelement aus wenigstens einem Material aufgebaut ist, das Stahl umfasst.

Die Stromabnehmereinrichtung kann grundsätzlich einfach auf das Dach des Wagenkastens aufgesetzt sein. Im Hinblick auf den reduzierten Strömungswiderstand des Fahrzeugs ist es jedoch bevorzugt, die Stromabnehmereinrichtung in einer Vertiefung des Wagenkastens anzuordnen, wobei die Vertiefung zumindest abschnittsweise, insbesondere aber umlaufend, in der Fahrzeuglängsrichtung und/oder der Fahrzeugquerrichtung durch eine Begrenzung, insbesondere eine Begrenzungswand, begrenzt ist.

Bevorzugt ist in diesen Fällen vorgesehen, dass die Abschirmeinrichtung zumindest abschnittsweise, vorzugsweise umlaufend, an die Begrenzung unter Ausbildung eines schmalen dritten Spaltes heranreicht, dessen Spaltbreite (minimaler Abstand zwischen Abschirmeinrichtung und Begrenzung) 2 mm bis 20 mm, vorzugsweise 5 mm bis 15 mm, weiter vorzugsweise 8 mm bis 12 mm, beträgt. Hierdurch ist in vorteilhafter Weise sichergestellt, dass die darunterliegende Dachstruktur zumindest in diesem Bereich mit dem schmalen Spalt im Wesentlichen vollständig durch die Abschirmeinrichtung abgeschirmt ist.

Bei bevorzugten Varianten des erfindungsgemäßen Schienenfahrzeugs ist die Begrenzung der Vertiefung in einem Randbereich der Vertiefung am Übergang zu einer Außenhaut des Wagenkastens in wenigstens einem gefasten Abschnitt nach Art einer Fase abgewinkelt ausgebildet, um an der Außenhaut eine definierte Strömungsabrisskante für eine die Außenhaut des Wagenkastens überstreichende Luftströmung auszubilden

Der Randbereich der Vertiefung weist bevorzugt einen vorderen Abschnitt und einen hinteren Abschnitt auf, die sich jeweils zumindest teilweise in der Fahrzeugquerrichtung zwischen zwei seitlichen Abschnitten erstrecken, die sich jeweils in der Fahrzeuglängsrichtung erstrecken. Der wenigstens eine gefaste Abschnitt erstreckt sich bevorzugt zumindest über 75%, vorzugsweise zumindest über 90%, weiter vorzugsweise über im Wesentlichen 100%, des vorderen Abschnitts und/oder des hinteren Abschnitts.

Durch diese abgewinkelte Gestaltung der Oberfläche im Nachlauf der Strömungsabrisskante kann zum einen in vorteilhafter Weise eine ausgeprägte scharfe Strömungsabrisskante erzielt werden, welche eine saubere, definierte Ablösung der Strömung von der Oberfläche gewährleistet. Dies ist im Hinblick auf eine geringe Aufweitung der sich in der abgelösten Strömung ausbildenden Scherschicht (in einer Richtung senkrecht zur Haupterstreckungsebene der Scherschicht) und damit einen geringen Strömungswiderstand des Fahrzeugs von Vorteil.

Ein weiterer Vorteil dieser abgewinkelten Gestaltung in liegt darin, dass bei Fahrt in einer umgekehrten Fahrtrichtung eine dann aus Richtung des gegenüberliegenden Randbereichs kommende Scherschicht nicht wie bei den herkömmlichen Gestaltungen auf eine im Wesentlichen senkrecht zur Auftreffrichtung ausgerichtete Oberfläche auftrifft, sondern auf die entsprechend weniger stark zur Auftreffrichtung geneigte Oberfläche der Fase auftrifft. Dies hat den Vorteil, dass in die auftreffende Scherschicht ein geringerer Impuls eingeleitet wird, sodass sich die Strömung schneller wieder an die Oberfläche anlegen und dort eine widerstandsarme Grenzschicht ausbilden kann.

Je nach Größe des Neigungswinkels zwischen der Oberfläche der Außenhaut des Wagenkastens und der Oberfläche der Fase kann es zwar beim Überströmen der Strömungsabrisskante (welches bei dieser umgekehrten Fahrtrichtung dann in umgekehrter Richtung von der Fase zur Außenhaut hin erfolgt) zu einer erneuten lokalen bzw. temporären Ablösung (in Form einer so genannten Ablöseblase) kommen, diese fällt jedoch wegen der günstigeren Neigung zwischen Außenhaut und Fase geringer als bei den herkömmlichen Gestaltungen aus. Mit anderen Worten wird mit der vorliegenden Erfindung der Aufprallwinkel der Scherschicht auf die Oberfläche reduziert, sodass es zu einem sanfteren Aufprall der Scherschicht auf die Oberfläche der Fase kommt, der ein schnelles Anlegen der Strömung an die Oberfläche begünstigt und so eine Reduktion des Strömungswiderstands mit sich bringt. Ein weiterer Vorteil dieses sanfteren Aufpralls der Scherschicht auf die Oberfläche liegt in der geringeren Schallemission, die damit einhergeht.

Die Stromabnehmereinrichtung kann grundsätzlich beliebig tief in der durch die Außenhaut des Wagenkastens definierten Hüllfläche versenkt sein. Limitierend ist hier lediglich die erforderliche Deckenhöhe im Innenraum des Fahrzeugs. Bei bevorzugten Varianten des erfindungsgemäßen Schienenfahrzeugs weist die Stromabnehmereinrichtung eine in die Vertiefung eingefahrene Ruheposition auf, wobei die Stromabnehmereinrichtung eine durch die Außenhaut des Wagenkastens definierte Hüllfläche in der Ruheposition in der Fahrzeughöhenrichtung um höchstens 90 mm, vorzugsweise höchstens 70 mm, weiter vorzugsweise höchstens 50 mm, überragt. Hierdurch werden aerodynamisch besonders günstige Konfigurationen erzielt. Insbesondere erübrigen sich hierbei auf die Außenhaut des Wagenkastens aufgesetzte Verkleidungen oder Hutzen, welche letztlich trotz aller aerodynamisch optimierter Gestaltung den Strömungswiderstand des Fahrzeugs erhöhen. So kann beispielsweise bei einem Triebzug im Hochgeschwindigkeitsverkehr bei einer Geschwindigkeit von 380 km/h im Vergleich zu einem herkömmlichen Dachaufbau mit aufgesetzten Verkleidungen eine wesentliche Einsparung von etwa 2% bis 5%, typischerweise etwa 3%, der benötigten Gesamtantriebsleistung erzielt werden.

Die Vertiefung kann (in der Draufsicht von oben auf das Dach des Wagenkastens) grundsätzlich eine beliebige Außenkontur aufweisen, so kann sie beispielsweise als einfacher rechteckiger Dachausschnitt mit im Wesentlichen rechteckiger Außenkontur gestaltet sein. Bevorzugt folgt die Außenkontur der Vertiefung im Wesentlichen der Geometrie bzw. Außenkontur der in ihre Ruheposition eingefahrenen Stromabnehmereinrichtung, sodass durch Vertiefung eine möglichst geringe (gegebenenfalls zu Schallemissionen führende) Störung in die Luftströmung eingebracht wird, welche das Dach des Wagenkastens überstreicht.

Bei dem Schienenfahrzeug kann es sich grundsätzlich um ein beliebiges Fahrzeug mit beliebiger Nennbetriebsgeschwindigkeit handeln. Vorzugsweise ist es jedoch für den Hochgeschwindigkeitsverkehr mit einer Nennbetriebsgeschwindigkeit oberhalb von 250 km/h, insbesondere oberhalb von 300 km/h, insbesondere von 320 km/h bis 390 km/h, ausgebildet, da hierbei die Vorteile der Erfindung besonders stark zum Tragen kommen.

Die vorliegende Erfindung betrifft weiterhin eine Schwingungsreduktionseinrichtung, die zur Geräuschreduktion in einem Innenraum eines Schienenfahrzeugs dazu ausgebildet ist, einen von einer Stromabnehmereinrichtung induzierten Eintrag von Schwingungen in eine Dachstruktur des Schienenfahrzeugs zu reduzieren. Hierzu weist sie die oben im Zusammenhang mit dem erfindungsgemäßen Schienenfahrzeug beschriebenen Merkmale auf. Mit einer solchen Schwingungsreduktionseinrichtung lassen sich die oben beschriebenen Varianten und Vorteile in demselben Maße erzielen, sodass hier lediglich auf die obigen Ausführungen Bezug genommen wird.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen:

### KURZE BESCHREIBUNG DER FIGUREN

- Figur 1: eine schematische, teilweise geschnittene Seitenansicht eines Teils einer bevorzugten Ausführungsform des erfindungsgemäßen Fahrzeugs mit einer bevorzugten Ausführungsform der erfindungsgemäßen Schwingungsreduktionseinrichtung;
- Figur 2: eine schematische perspektivische Ansicht eines Teils des Fahrzeugs aus Figur 1 in einem montierten Zustand;
- Figur 3: eine schematische perspektivische Ansicht des Teils des Fahrzeugs aus Figur 2 in einen Zwischenzustand während der Montage;
- Figur 4: eine schematische perspektivische Ansicht einer Luftschallreduktionseinrichtung, welche bei dem Fahrzeug aus Figur 1 verwendet wird;
- Figur 5: eine schematische Schnittansicht eines Teils des Fahrzeugs entlang der Linie V-V aus Figur 3.

### DETAILLIERTE BESCHREIBUNG DER ERFINDUNG

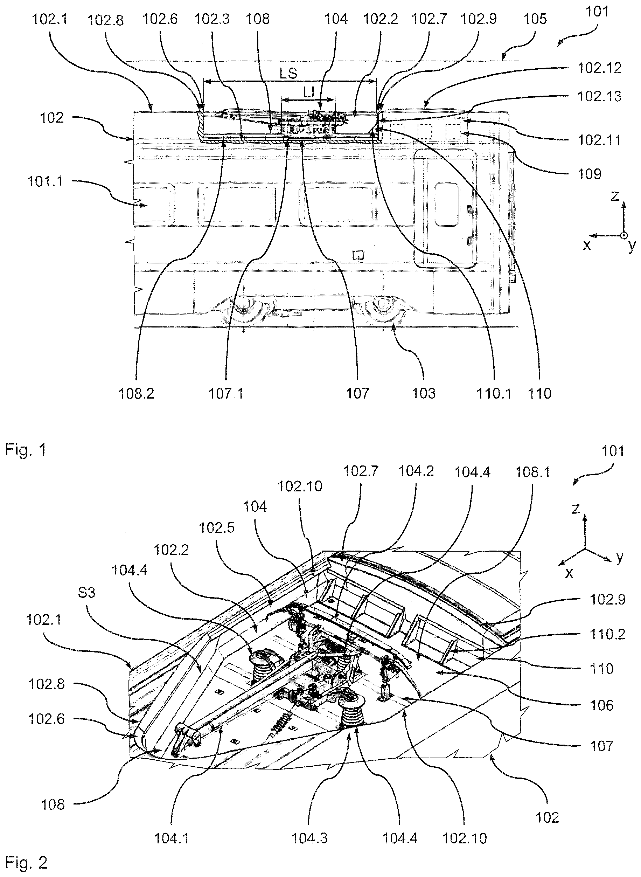

Im Folgenden wird unter Bezugnahme auf die Figuren 1 bis 5 ein bevorzugtes Ausführungsbeispiel des erfindungsgemäßen Fahrzeugs in Form eines Schienenfahrzeugs 101 beschrieben. Bei dem Schienenfahrzeug 101 handelt es sich um einen Wagen eines Triebzugs für den Hochgeschwindigkeitsverkehr, dessen Nennbetriebsgeschwindigkeit oberhalb von 250 km/h, nämlich bei Vₙ = 380 km/h, liegt.

Es sei an dieser Stelle angemerkt, dass die nachfolgenden Ausführungen für einen Strömungszustand bei Fahrt des Fahrzeugs 101 mit konstanter Geschwindigkeit im geraden ebenen Gleis ohne die Einflüsse von Seitenwind oder dergleichen gemacht werden, sofern keine expliziten anderweitigen Angaben gemacht werden. Es versteht sich, dass sich bei einer Abweichung von diesem Betriebszustand (beispielsweise infolge einer Kurvenfahrt oder von Seitenwind etc.) Abweichungen von den beschriebenen Strömungsverhältnissen, insbesondere den Strömungsrichtungen ergeben können, wobei jedoch die grundsätzlichen Feststellungen im Wesentlichen weiterhin gelten.

Das Fahrzeug 101 umfasst einen Wagenkasten 102, der eine Außenhaut 102.1 des Fahrzeugs 101 definiert. Der Wagenkasten 102 ist im Bereich seiner beiden Enden in herkömmlicher Weise jeweils auf einem Fahrwerk in Form eines Drehgestells 103 abgestützt ist. Es versteht sich jedoch, dass die vorliegende Erfindung auch in Verbindung mit anderen Konfigurationen eingesetzt werden kann, bei denen der Wagenkasten lediglich auf einem Fahrwerk abgestützt ist.

Zum einfacheren Verständnis der nachfolgenden Erläuterungen ist in den Figuren ein (durch die Radaufstandsebene des Drehgestells 103 vorgegebenes) Fahrzeug-Koordinatensystem x,y,z angegeben, in dem die x-Koordinate die Längsrichtung des Schienenfahrzeugs 101, die y-Koordinate die Querrichtung des Schienenfahrzeugs 101 und die z-Koordinate die Höhenrichtung des Schienenfahrzeugs 101 bezeichnen.

Der Wagenkasten 102 weist in dem dargestellten Abschnitt (abgesehen von lokalen Ausnehmungen oder Anbauten für funktionale Komponenten des Fahrzeugs, wie beispielsweise Stromabnehmer, Dachcontainer etc.) eine im Wesentlichen prismatische Gestaltung mit entlang der Fahrzeuglängsrichtung im Wesentlichen identischen Schnittkonturen der Außenhaut auf.

Im Bereich einer solchen Ausnehmung, die in Form einer Vertiefung 102.2 im Dachbereich des Wagenkastens 102 ausgebildet ist, ist im vorliegenden Beispiel eine Stromabnehmereinrichtung 104 angeordnet, welche dazu ausgebildet ist, in herkömmlicher Weise in einem (nicht dargestellten) ausgefahrenen Zustand eine Oberleitung 105 zu kontaktieren, um das Fahrzeug 101 mit elektrischer Energie zu versorgen.

Die Stromabnehmereinrichtung 104 ist in herkömmlicher Weise als so genannter Pantograph gestaltet, welcher am freien Ende einer Halbscherenmechanik 104.1 eine Schleifleiste 104.2 trägt, welche im aktivierten, ausgefahrenen Zustand der Stromabnehmereinrichtung 104 die Oberleitung 105 kontaktiert. Die Halbscherenmechanik 104.1 ist in herkömmlicher Weise über eine Isolatoreinrichtung 104.3 in Form von drei Isolatoren 104.4 der Stromabnehmereinrichtung 104 mit der Dachstruktur 102.3 des Wagenkastens 102 verbunden.

Die Isolatoren 104.4 sind in herkömmlicher Weise im Dreieck angeordnet, wobei sie in der Fahrzeugquerrichtung eine maximale Stützbreite BI definieren, über weiche auf die Stromabnehmereinrichtung 104 wirkende Rollmomente (d. h. Drehmomente um die Fahrzeuglängsrichtung) abgestützt werden. In der Fahrzeuglängsrichtung definieren die Isolatoren 104.4 eine maximale Stützlänge LI, über welche auf die Stromabnehmereinrichtung 104 wirkende Nickmomente (d. h. Drehmomente um die Fahrzeugquerrichtung) abgestützt werden.

Die Höhe der Isolatoren 104.4 (d. h. ihre Abmessung in der Fahrzeughöhenrichtung) ist in herkömmlicher Weise so gewählt, dass bei aktivierter, die Oberleitung 105 kontaktierender Stromabnehmereinrichtung 104 zwischen den Strom führenden, nicht mit einer elektrischen Isolation versehenen Bauteilen der Stromabnehmereinrichtung 104 und den angrenzenden Teilen des Wagenkastens 102 ein vorgegebener Abstand nicht unterschritten wird, um durch die so geschaffene Luftisolationsstrecke Spannungsüberschläge zu vermeiden.

Um im Betrieb des Fahrzeugs 101 eine möglichst geringe Geräuschimmission in den Innenraum 101.1 des Fahrzeugs erzielen kann, ist zwischen der Isolatoreinrichtung 104.4 und der Dachstruktur 102.3 eine Schwingungsreduktionseinrichtung 106 angeordnet. Die Schwingungsreduktionseinrichtung 106 umfasst im vorliegenden Beispiel sowohl eine Körperschallreduktionseinrichtung 107 als auch eine Luftschallreduktionseinrichtung 108, welche beide dazu ausgebildet sind, einen von der Stromabnehmereinrichtung induzierten Eintrag von Schwingungen in die Dachstruktur zu reduzieren.

So ist die Körperschallreduktionseinrichtung 107 dazu ausgebildet, einen von der Stromabnehmereinrichtung 104 induzierten Eintrag von Körperschall in die Dachstruktur 102.3 zu reduzieren, während die Luftschallreduktionseinrichtung 108 dazu ausgebildet ist, einen von der Stromabnehmereinrichtung 104 induzierten Eintrag von Luftschall in die Dachstruktur 102.3 zu reduzieren. Durch beide Maßnahmen lassen sich erhebliche Reduktionen der Schallimmission in den Fahrzeuginnenraum erzielen, wie dies nachfolgend näher beschrieben wird.

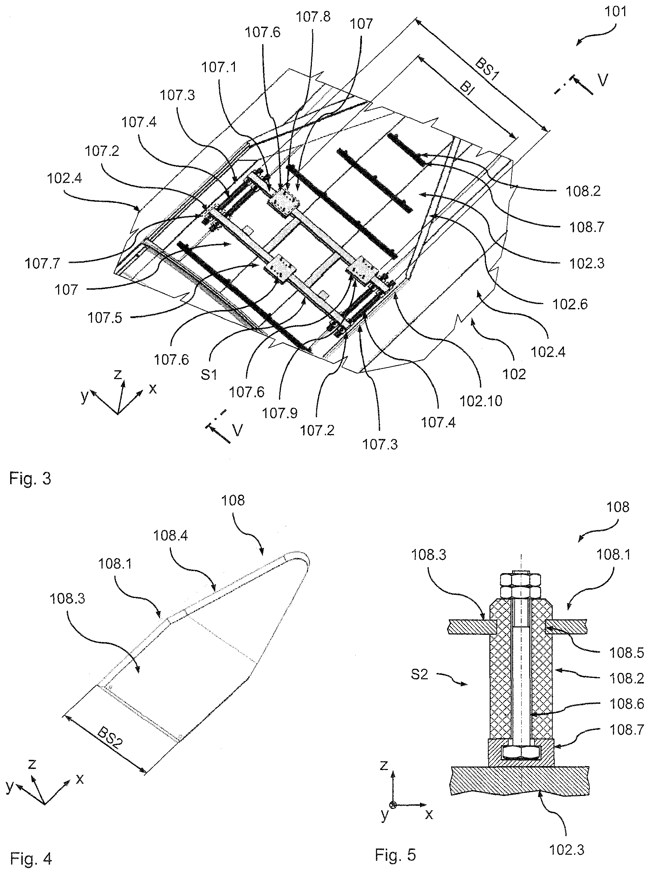

Wie insbesondere der Figur 3 zu entnehmen ist (welche das Fahrzeug 101 in einem Zwischenzustand ohne Luftschallreduktionseinrichtung 108 und Stromabnehmereinrichtung 104 zeigt), umfasst die Körperschallreduktionseinrichtung 107 im vorliegenden Beispiel eine Trägereinrichtung in Form eines leiterförmig gestalteten Trägerrahmens 107.1 für die Stromabnehmereinrichtung 104.

Der Trägerrahmen 107.1 weist in der Fahrzeugquerrichtung (y-Richtung) zwei seitliche Enden auf, an denen jeweils ein Dachanschlussbereich 107.2 ausgebildet ist. In diesem Dachanschlussbereich 107.2 ist der Trägerrahmen 107.1 jeweils über eine Dachanschlusseinrichtung 107.3 in Form von zwei Dachmontageschienen 107.4 mit der Dachstruktur 102.3 des Wagenkastens 102 verbunden.

Die vier Dachmontageschienen 107.4 sind im vorliegenden Beispiel in herkömmlicher Weise als so genannte C-Schienen ausgebildet, welche im vorliegenden Beispiel im Wesentlichen starr mit der Dachstruktur 102.3 (über eine beliebige kraftschlüssige und/oder formschlüssige und/oder stoffschlüssige Verbindung) verbunden sind. In den Dachmontageschienen 107.4 sind entsprechende Gleitstücke verschieblich angeordnet, über welche der Trägerrahmen 107.1 (nach entsprechender Justierung) mittels entsprechender Schraubverbindungen, Klemmverbindungen oder dergleichen an der Dachstruktur 102.3 befestigt werden kann.

Es versteht sich jedoch, dass bei anderen Varianten auch eine beliebige andere Gestaltung für den Anschluss der Trägereinrichtung an der Dachstruktur vorgesehen sein kann. So kann die Trägereinrichtung auch unmittelbar über eine geeignete kraftschlüssige und/oder formschlüssige und/oder stoffschlüssige Verbindung mit der Dachstruktur verbunden sein.

Der Trägerrahmen 107.1 weist (in der Fahrzeugquerrichtung) in einem Mittenbereich 107.5 drei Isolatoranschlussbereiche 107.6 auf, in welchen die Isolatoreinrichtung 104.3 (mit der maximalen Stützbreite BI und der maximalen Stützlänge LI) mit dem Trägerrahmen 107.1 verbunden wird, um die Stromabnehmereinrichtung 104 auf der Dachstruktur 102.3 abzustützen.

Der Trägerrahmen 107.1 weist in der Fahrzeugquerrichtung eine maximale Breitenabmessung BS auf, die etwa 140% der maximalen Stützbreite BI beträgt und damit deutlich größer ist als die maximale Stützbreite BI. Dabei sind die Dachanschlussbereiche 107.2 in der Fahrzeugquerrichtung weiter von einer Längsmittenebene (xz-Ebene) des Wagenkastens 102 entfernt als ein angrenzender Isolatoranschlussbereich 107.6.

Durch dieses seitliche Überragen der Isolatoreinrichtung 104 durch die zwischen der Isolatoreinrichtung 104 und der Dachstruktur 102.3 angeordnete Trägereinrichtung 107.1 werden im vorliegenden Beispiel die Eigenschaften im Zusammenhang mit der Einleitung von Körperschall in die Struktur des Wagenkastens 102 verbessert. Dies geschieht dadurch, dass die effektive Stützbreite bei der Abstützung der Stromabnehmereinrichtung 104 (zumindest nahezu bis) auf die Breitenabmessung BS des Trägerrahmens 107.1 erhöht wird, sodass bei der Abstützung von Rollmomenten geringere, die Struktur des Wagenkastens 102 anregende Stützkräfte und damit letztlich geringere Schwingungsamplituden erzielt werden.

Zudem verlagert die (die Isolatoreinrichtung 104.3 in der Fahrzeugquerrichtung seitlich überragende) Trägereinrichtung 107.1 die Kraftangriffspunkte der Stützkräfte aus dem primär senkrecht zur Fahrzeughöhenrichtung ausgerichteten Bereich der Dachstruktur 102.3 näher an den Bereich der primär in der Fahrzeughöhenrichtung verlaufenden Seitenwände 102.4 des Wagenkastens 102. Hierdurch wird erreicht, dass die in die Wandstruktur des Wagenkastens 102 eingeleiteten Stützkräfte nicht mehr primär senkrecht zur Wandebene in die Dachstruktur 102.3 eingeleitet werden, sondern primär in der Ebene der seitlichen Wandstruktur 102.4 wirken. Dies ist insoweit von Vorteil, als die Anregung der stützenden Wandstrukturen 102.3, 102.4 zu Biegeschwingungen reduziert wird, die unter akustischen Gesichtspunkten besonders kritisch sind.

Es versteht sich, dass bei bestimmten Varianten der Erfindung auch vorgesehen sein kann, dass die Trägereinrichtung 107.1 auch in der Fahrzeuglängsrichtung über die Isolatoreinrichtung 104 hinausragen kann, wodurch sich der Betrag der Stützkräfte reduziert, welche bei der Abstützung von Nickmomenten wirken.

Der Trägerrahmen 107.1 ist im vorliegenden Beispiel lediglich in den Dachanschlussbereichen 107.2 über die vier Dachmontageschienen 107.4 mit der Dachstruktur 102.3 verbunden. Zwischen den Dachanschlussbereichen 107.2 ist in der Fahrzeughöhenrichtung ein erster Spalt S1 zwischen dem Trägerrahmen 107.1 und der Dachstruktur 102.3 ausgebildet. Im vorliegenden Beispiel ergibt sich hierdurch eine erste Spaltbreite BS1 des ersten Spalts S1 in der Fahrzeugquerrichtung, die etwa 85% der maximalen Querabmessung bzw. Breitenabmessung BS des Trägerrahmens 107.1 beträgt. Hierdurch wird eine unmittelbare mechanische Anregung der Dachstruktur 102.3 außerhalb des jeweiligen Dachanschlussbereichs 107.2 verhindert.

Die Spalthöhe HS1 (also die Abmessung des ersten Spalts in der Fahrzeughöhenrichtung) ist im vorliegenden Beispiel so gewählt, dass es unter sämtlichen im Normalbetrieb des Fahrzeugs 101 zu erwartenden Lasten (und daraus resultierenden Deformationen des Trägerrahmens 107) außerhalb der Dachanschlussbereiche 107.2 zu keinem Kontakt zwischen den Trägerrahmen 107.1 und der Dachstruktur 102.3 kommt.

Im vorliegenden Beispiel beträgt die erste Spalthöhe HS1 8 mm bis 12 mm, wodurch sich in vorteilhafter Weise eine vergleichsweise niedrig bauende Konfiguration erzielen lässt, sodass die gesamte Bauhöhe der Stromabnehmereinrichtung 104 über der Dachstruktur 102.3 nur vergleichsweise moderat durch die zusätzliche Trägereinrichtung 107.1 erhöht wird.

Der erste Spalt S1 kann grundsätzlich mit einem oder mehreren Vibrationen dämmenden Materialien ausgefüllt sein. Im vorliegenden Beispiel ist der erste Spalt S1 jedoch als Luftspalt ausgebildet, da sich hiermit besonders einfach zu realisierende Konfigurationen ergeben.

Der Trägerrahmen 107.1 ist im vorliegenden Beispiel als Schweißkonstruktion aus einer Mehrzahl von Hohlprofilelementen ausgeführt, sodass eine besonders leicht bauende und steife Gestaltung mit hohen Eigenfrequenzen erzielt wird. Für den Trägerrahmen 107.1 wird im vorliegenden Beispiel Stahl verwendet, da sich aufgrund von dessen Dämpfungseigenschaften besonders günstige Eigenschaften hinsichtlich der Schwingungsreduzierung ergeben. Es versteht sich jedoch, dass bei anderen Varianten der Erfindung auch beliebige andere Materialien, beispielsweise Metalle (wie Aluminium etc.) oder verstärkte Kunststoffe bzw. Verbundwerkstoffe etc. einzeln oder in Kombination zur Anwendung kommen können.

Der Trägerrahmen 107.1 ist im vorliegenden Beispiel als im Wesentlichen starres Bauteil gestaltet. Bei anderen Varianten der Erfindung kann aber auch ein (beispielsweise aus Gummi aufgebautes) Schwingungsreduktionselement in den Kraftfluss zwischen der Isolatoreinrichtung 104.3 und der Dachstruktur 102.3 geschaltet sein. So kann beispielsweise ein solches Schwingungsreduktionselement durch eine elastische, dämpfende Zwischenlage gebildet sein, welche im jeweiligen Dachanschlussbereich 107.2 zwischen den Trägerrahmen 107.1 und die Dachmontageschienen 107.4 gelegt wird, wie dies in Figur 3 in einem Dachanschlussbereich 107.2 durch die gestrichelte Kontur 107.7 angedeutet ist. Ebenso kann eine solche elastische, dämpfende Zwischenlage zusätzlich oder alternativ jeweils zwischen den Isolatoren 104.4 und dem Trägerrahmen 107.1 angeordnet sein, wie dies in Figur 3 in einem Dachanschlussbereich 107.2 durch die gestrichelte Kontur 107.8 angedeutet ist. Ebenso kann ein geeigneter Abschnitt des Trägerrahmens 107.1 im Kraftfluss von der Stromabnehmereinrichtung 104 zur Dachstruktur 102.3 mit entsprechend dämpfenden Eigenschaften versehen sein.

Im vorliegenden Beispiel sind zudem im jeweiligen Isolatoranschlussbereich 107.6 Schwingungsreduktionselemente in Form von Blockiermassen 107.9 am Trägerrahmen 107.1 befestigt. Diese Reduktionselemente 107.9 modifizieren das Schwingungsverhalten des Trägerrahmens 107.1 (insbesondere dessen Eigenformen und die Amplituden der Eigenformen) entsprechend, um den Eintrag von Schwingungen in die Dachstruktur 102.3 in den relevanten (nachfolgend noch näher beschriebenen) Frequenzbereichen zu reduzieren. Hierbei sind die Reduktionselemente 107.9 außerhalb des unmittelbaren Kraftflusses zwischen den Isolatoren 104.4 und der Dachstruktur 102.3 angeordnet, um das Schwingungsverhalten modifizierend auf den (zu Schwingungen angeregten) Trägerrahmen 107.1 zu wirken.

Die Anordnung der Reduktionselemente 107.9 am jeweiligen Isolatoranschlussbereich 107.6 bringt dabei den Vorteil mit sich, dass an dieser Stelle die Krafteinleitung von der Stromabnehmereinrichtung 104 in den Trägerrahmen 107.1 erfolgt und folglich dort in der Regel besonders hohe (typischerweise maximale) Schwingungsamplituden auftreten. Demgemäß können die Reduktionselemente 107.9 dort eine besonders gute Modifikationswirkung entfalten.

Das Frequenzspektrum, in dem die Körperschallreduktionseinrichtung 107 eine wirksame Geräuschreduktion bewirkt, ist im vorliegenden Beispiel auf den Wagenkasten 102 abgestimmt. Hierbei werden vor allen Dingen Frequenzen, die im Innenraum 102.1 des Wagenkastens 102 zu erheblichen Resonanzen und damit zu einem hohen Schalldruck führen, gezielt gedämpft.

Im vorliegenden Beispiel wird durch die Körperschallreduktionseinrichtung 107 eine Dämpfung in einem Frequenzbereich von 20 Hz bis 800 Hz erzielt, wobei insbesondere Frequenzbereich von 100 Hz bis 800 Hz eine starke Dämpfung gegenüber einer herkömmlichen Gestaltung, bei welcher die Stromabnehmereinrichtung 104 direkt (also ohne den Trägerrahmen 107.1) auf der Dachstruktur 102.3 montiert ist, erzielt wird. Besonders ausgeprägt ist diese Verbesserung im Frequenzbereich von 200 Hz bis 800 Hz.

Die Schwingungsreduktionseinrichtung 106 umfasst im vorliegenden Beispiel weiterhin als Luftschallreduktionseinrichtung eine Abschirmeinrichtung 108 für Luftschall, der von der Stromabnehmereinrichtung 104 induziert wird.

Die Abschirmeinrichtung 108 umfasst im vorliegenden Beispiel eine im Wesentlichen wannenförmige Abschirmung 108.1, welche zwischen der Isolatoreinrichtung 104.3 und der Dachstruktur 102.3 des Wagenkastens 102 angeordnet ist. Die Abschirmung 108.1 überragt die Isolatoreinrichtung 104.3 sowohl in der Fahrzeugquerrichtung als auch in der Fahrzeuglängsrichtung, um eine möglichst großflächige Abschirmung der Dachstruktur 102.3 gegen den von der Stromabnehmereinrichtung 104 induzierten Luftschall zu erzielen.

Die Abschirmung 108.1 weist hierzu in der Fahrzeugquerrichtung eine maximale Breitenabmessung BS2 auf, die etwa 150% der maximalen Stützbreite BI beträgt und damit ebenfalls deutlich größer ist als die maximale Stützbreite BI. Weiterhin weist die Abschirmung 108.1 in der Fahrzeuglängsrichtung hierzu eine maximale Längenabmessung LS auf, die etwa 350% der maximalen Stützlänge LI der Isolatoreinrichtung 104.3 beträgt.

Die Abschirmung 108.1 ist im vorliegenden Beispiel an mehreren Punkten mit der Dachstruktur verbunden. So ist die Abschirmung 108.1 zum einen zwischen der Isolatoreinrichtung 104.3 und dem Trägerrahmen 107.1 geklemmt. Zum anderen ist die Abschirmung 108.1 außerhalb des Bereichs des Trägerrahmens 107.1 über eine Mehrzahl von über die Dachstruktur 102.3 verteilt angeordneten Schwingungsentkopplungselementen 108.2 auf der Dachstruktur 102.3 abgestützt.

Dies ist bei dem vorliegenden Fahrzeug 101 für den Hochgeschwindigkeitsverkehr von besonderem Vorteil, da in dessen Betrieb zum Teil erhebliche singuläre Druckschwankungen bzw. Druckspitzen (z. B. bei Zugbegegnungen, Tunneleinfahrten etc.) auftreten können, welche erhebliche Lasten senkrecht zur Haupterstreckungsebene der Abschirmung 108.1 bedeuten. Diese verteilte, schwingungsentkoppelte Abstützung der Abschirmung 108.1 sichert die Abschirmung 108.1 in diesem Fall in vorteilhafter Weise gegen übermäßige Deformation, ohne die Abschirmeigenschaften gegen den von der Stromabnehmereinrichtung 104 induzierten Luftschall erheblich zu beeinträchtigen.

Die Eigenfrequenz der Abschirmeinrichtung 108 ist ebenso wie die Eigenfrequenz der Schwingungsentkopplungselemente 108.2 im vorliegenden Beispiel möglichst weitgehend auf das zu erwartende Frequenzspektrum des von der Stromabnehmereinrichtung 104 induzierten Luftschalls sowie wiederum die Struktur des Wagenkastens und deren Resonanzfrequenzen abgestimmt, um eine gute Abschirmwirkung zu erzielen.

Im vorliegenden Beispiel wird auch durch die Abschirmeinrichtung 108 eine Dämpfung in einem Frequenzbereich von 20 Hz bis 800 Hz erzielt, wobei insbesondere Frequenzbereich von 100 Hz bis 800 Hz eine starke Dämpfung gegenüber einer herkömmlichen Gestaltung ohne Abschirmeinrichtung 108 erzielt wird.

Die Abschirmung 108.1 umfasst im vorliegenden Beispiel ein plattenförmiges, im Wesentlichen ebenes Abschirmelement 108.3, welches der Dachstruktur 102.3 unter Ausbildung eines zweiten Spalts S2 (in der Fahrzeughöhenrichtung) zugeordnet ist. Der zweite Spalt S2 gewährleistet hierbei unter anderem, dass sich das Abschirmelement 108.2 außerhalb seiner Abstützungspunkte möglichst frei deformieren kann, sodass es die Schallenergie aufnehmen und durch die daraus resultierende Deformation zumindest einen Teil in Form von innerer Reibung dissipieren kann.

Der zweite Spalt S2 ist hierzu auf die Schwingungseigenschaften der Abschirmung 108.1 abgestimmt, um die beschriebene Energiedissipation zu ermöglichen. Im vorliegenden Beispiel weist der zweite Spalt S2 hierzu in der Fahrzeughöhenrichtung eine zweite Spalthöhe HS2 auf, die 70 mm bis 90 mm beträgt.

Der zweite Spalt S2 kann wiederum grundsätzlich ganz oder teilweise mit einem oder mehreren Vibrationen dämpfenden oder dämmenden Materialien ausgefüllt sein. So können beispielsweise mikroperforierte Bleche zur Bedämpfung des Hohlraums eingesetzt werden. Im vorliegenden Beispiel ist jedoch auch der zweite Spalt S2 als Luftspalt ausgebildet, da sich hiermit besonders einfach zu realisierende Konfigurationen ergeben.

Das Abschirmelement 108.3 ist im vorliegenden Fall zum einen mit einem umlaufend an das Abschirmelement 108.3 angrenzenden, in der Fahrzeughöhenrichtung nach oben weisenden Randbereich 108.4 versehen, welcher die Formstabilität der Abschirmung erhöht. Zudem ist das Abschirmelement 108.3 im Bereich der Verbindungspunkte zu den Schwingungsentkopplungselementen 108.2 mit (nicht näher dargestellten) mechanischen Verstärkungseinrichtungen versehen, um seine Formstabilität im Betrieb noch weiter zu erhöhen. Als Verstärkungseinrichtungen können grundsätzlich beliebige geeignete Elemente, wie beispielsweise Rippen, Rinnen, Sicken etc. in beliebiger geeigneter Anordnung vorgesehen sein. Die Gestalt und Anordnung dieser Verstärkungseinrichtungen kann zudem dazu genutzt werden, das Schwingungsverhalten des Abschirmelements 108.3 und damit der Abschirmung 108.3 zu beeinflussen.

Wie insbesondere Figur 5 zu entnehmen ist, sind die Schwingungsentkopplungselemente 108.2 im vorliegenden Beispiel als zylindrische Gummihülsen mit einer ringförmigen Nut 108.5 gestaltet, welche durch eine zugeordnete Bohrung in dem Abschirmelement 108.3 gesteckt werden, sodass die Wandung, welche die Bohrung begrenzt, in der Nut 108.5 einrastet, mithin also ein Formschluss zwischen der Gummihülse 108.2 und dem Abschirmelement 108.3 entsteht.

Die Fixierung erfolgt über Schrauben 108.6, welche durch die Gummihülsen 108.2 hindurch gesteckt werden. Der Kopf der Schrauben 108.6 ist dabei in eine mit der Dachstruktur fest verbundene C-Schiene eingehakt, sodass über die Verschraubungen am freien Ende der Schraube 108.6 eine Fixierung erfolgen kann. Hierbei kann insbesondere über die durch die Verschraubung erzeugte Vorspannung eine Einstellung der Dämpfungseigenschaften der Schwingungsentkopplungselemente 108.2 erzielt werden

Auch für die Abschirmung 108.1, insbesondere das Abschirmelement 108.3, wird im vorliegenden Beispiel wegen der besonders günstigen Eigenschaften hinsichtlich der Schwingungsreduzierung bzw. Schwingungsdämpfung Stahl verwendet. Es versteht sich jedoch, dass bei anderen Varianten der Erfindung auch beliebige andere Materialien, beispielsweise Metalle (wie Aluminium etc.) oder verstärkte Kunststoffe bzw. Verbundwerkstoffe etc. einzeln oder in Kombination zur Anwendung kommen können. Insbesondere können eine oder mehrere so genannte Schwerschichten vollflächig oder in Teilbereichen auf die Abschirmung 108.1 aufgebracht werden, um deren Dämpfungseigenschaften anzupassen.

Wie insbesondere den Figuren 1 und 2 zu entnehmen ist, ist die Vertiefung 102.2, in welcher die Stromabnehmereinrichtung 104 im Dach des Wagenkastens 102 versenkt angeordnet ist, umlaufend in der Fahrzeuglängsrichtung und der Fahrzeugquerrichtung durch eine Begrenzungswand 102.5 begrenzt.

Die Abschirmung 108.1 reicht unter Ausbildung eines schmalen dritten Spaltes S3 umlaufend so nahe an die Begrenzungswand 102.5 heran, dass die Spaltbreite BS3 (also der minimale Abstand zwischen der Abschirmung 108.1 und der Begrenzungswand 102.5) etwa 8 mm beträgt. Hierdurch ist in vorteilhafter Weise sichergestellt, dass die darunterliegende Dachstruktur 102.3 Spalt im Wesentlichen vollständig durch die Abschirmeinrichtung 108 gegen den von der Stromabnehmereinrichtung 104 induzierten Luftschall abgeschirmt ist.

Wie den Figuren 1 und 2 weiterhin zu entnehmen ist, ist die Begrenzungswand 102.5 der Vertiefung 102.2 in einem Randbereich der Vertiefung 102.2 am Übergang zur Außenhaut 102.1 des Wagenkastens in einem vorderen Abschnitt 102.6 und einem hinteren Abschnitt 102.7 nach Art einer Fase abgewinkelt ausgebildet, um an der Außenhaut 102.1 eine definierte Strömungsabrisskante 102.8 bzw. 102.9 für eine die Außenhaut 102.1 überstreichende Luftströmung auszubilden.

Der vordere Abschnitt 102.6 und der hintere Abschnitt 102.7 erstrecken sich dabei zumindest teilweise in der Fahrzeugquerrichtung zwischen zwei seitlichen Abschnitten 102.10 erstrecken, die sich jeweils in der Fahrzeuglängsrichtung erstrecken. Die Fase ist dabei in der Fahrzeugquerrichtung jeweils die gesamte Breite des vorderen Abschnitts 102.6 bzw. des hinteren Abschnitts 102.7 ausgebildet.

Durch diese abgewinkelte Gestaltung der Oberfläche im Nachlauf der Strömungsabrisskante 102.8 bzw. 102.9 kann zum einen in vorteilhafter Weise eine ausgeprägte scharfe Strömungsabrisskante erzielt werden, weiche eine saubere, definierte Ablösung der Strömung von der Oberfläche 102.1 gewährleistet. Dies ist im Hinblick auf eine geringe Aufweitung der sich in der abgelösten Strömung ausbildenden Scherschicht (in einer Richtung senkrecht zur Haupterstreckungsebene der Scherschicht) und damit einen geringen Strömungswiderstand des Fahrzeugs 101 von Vorteil.

Ein weiterer Vorteil dieser abgewinkelten Gestaltung in liegt darin, dass bei Fahrt in einer umgekehrten Fahrtrichtung eine dann aus Richtung des gegenüberliegenden Abschnitts 102.7 bzw. 102.6 des Randbereichs der Vertiefung 102.2 kommende Scherschicht nicht wie bei den herkömmlichen Gestaltungen auf eine im Wesentlichen senkrecht zur Auftreffrichtung ausgerichtete Oberfläche auftrifft, sondern auf die entsprechend weniger stark zur Auftreffrichtung geneigte Oberfläche der Fase auftrifft. Dies hat den Vorteil, dass in die auftreffende Scherschicht ein geringerer Impuls eingeleitet wird, sodass sich die Strömung schneller wieder an die Oberfläche 102.1 anlegen und dort eine widerstandsarme Grenzschicht ausbilden kann.

Je nach Größe des Neigungswinkels zwischen der Oberfläche der Außenhaut 102.1 des Wagenkastens und der Oberfläche der Fase 102.7 bzw. 102.6 kann es zwar beim Überströmen der Strömungsabrisskante 102.9 bzw. 102.8 (welches bei dieser umgekehrten Fahrtrichtung dann in umgekehrter Richtung von der Fase zur Außenhaut hin erfolgt) zu einer erneuten lokalen bzw. temporären Ablösung (in Form einer so genannten Ablöseblase) kommen, diese fällt jedoch wegen der günstigeren Neigung zwischen Außenhaut 102.1 und Fase 102.7 bzw. 102.6 geringer als bei den herkömmlichen Gestaltungen aus. Mit anderen Worten wird mit der vorliegenden Erfindung der Aufprallwinkel der Scherschicht auf die Oberfläche reduziert, sodass es zu einem sanfteren Aufprall der Scherschicht auf die Oberfläche der Fase 102.7 bzw. 102.6 kommt, der ein schnelles Anlegen der Strömung an die Oberfläche 102.1 begünstigt und so eine Reduktion des Strömungswiderstands mit sich bringt. Ein weiterer Vorteil dieses sanfteren Aufpralls der Scherschicht auf die Oberfläche liegt in der geringeren Schallemission, die damit einhergeht.

Die Stromabnehmereinrichtung 104 weist im deaktivierten Zustand die in Figur 1 eingefahrene Position auf, in der sie tief in der durch die Außenhaut 102.1 des Wagenkastens 102 definierten Hüllfläche versenkt ist. Limitierend ist hier lediglich die erforderliche Deckenhöhe im Innenraum 101.1 des Fahrzeugs 101. Im vorliegenden Beispiel ist die Stromabnehmereinrichtung 104 in der eingefahrenen Ruheposition so weit in der Hüllfläche versenkt, dass sie die Hüllfläche 102.1 in der Fahrzeughöhenrichtung (im Bereich der Hörner der Schleifleiste 104.2) um höchstens 50 mm, überragt. Hierdurch wird eine aerodynamisch besonders günstige Konfiguration erzielt, wobei sich auf die Außenhaut des Wagenkastens aufgesetzte Verkleidungen oder Hutzen erübrigen, welche letztlich trotz aller aerodynamisch optimierter Gestaltung die Widerstandsfläche und damit den Strömungswiderstand des Fahrzeugs erhöhen.

Weiterhin ist die Vertiefung 102.2 (in der Draufsicht von oben auf den Dachbereich des Wagenkastens 102) als Dachausschnitt mit einer Außenkontur gestaltet, die im Wesentlichen der Geometrie bzw. Außenkontur der in ihre Ruheposition eingefahrenen Stromabnehmereinrichtung 104 folgt, sodass durch Vertiefung 102.2 eine möglichst geringe (gegebenenfalls zu Schallemissionen führende) Störung in die Luftströmung eingebracht wird, welche das Dach des Wagenkastens 102 überstreicht. Der Abstand der Außenhaut 102.1 und insbesondere der Begrenzungswand 102.5, zur Stromabnehmereinrichtung 104 ist dabei so gewählt, dass bei aktivierter, die Oberleitung 105 kontaktierender Stromabnehmereinrichtung 104 zwischen den Strom führenden, nicht mit einer elektrischen Isolation versehenen Bauteilen der Stromabnehmereinrichtung 104 und den angrenzenden Teilen des Wagenkastens 102 ein vorgegebener Abstand nicht unterschritten wird, um durch die so geschaffene Luftisolationsstrecke Spannungsüberschläge zu vermeiden.

Wie der Figur 1 weiterhin zu entnehmen ist, ist benachbart zum schleifleistenseitigen Ende der Vertiefung 102.2 eine weitere Vertiefung 102.11 im Dachbereich des Wagenkastens 102 vorgesehen. In dieser weiteren Vertiefung 102.11 sind mit der Stromabnehmereinrichtung 104 verbundene Hochspannungskomponenten 109 der Hochspannungsversorgung des Fahrzeugs 101 angeordnet (wie beispielsweise weitere Isolatoren, Strom- und/oder Spannungswandler, Haupt- und/oder Trennschalter etc.). Die weitere Vertiefung 102.11 ist durch eine Abdeckung 102.12 vollständig überdeckt und in Fahrzeuglängsrichtung von der Vertiefung 102.2 durch eine Trennwand 102.13 getrennt.

In Figur 1 und 2 ist ferner ein Verschmutzungsschutz 110 dargestellt, der ein oder mehrere (zur Fahrzeughöhenrichtung und Fahrzeuglängsrichtung) geneigte Abdeckelemente 110.1 oder dergleichen umfasst (siehe Figur 1), die sich in Fahrzeugquerrichtung im Wesentlichen über die Breite der Vertiefung 102.2 erstrecken. Die Abdeckelemente 110.1 sind auf Konsolen 110.2 (siehe Figur 2) montiert und liegen bündig an der Trennwand 102.13 an. Die Konsolen 110.2 sind ihrerseits auf der Abschirmung 108.1 montiert. Die Abdeckelemente 110.1 sind vorzugsweise als Lochbieche mit beispielsweise einem Lochanteil von 50% gestaltet. Damit wird auch im Falle von Schmutzansammlungen sichergestellt, dass eindringendes Wasser durch einen von den Abdeckelementen 110.1 überdeckten Wasserablauf abfließen kann.

Durch den Verschmutzungsschutz 110 wird verhindert, dass sich größere Gegenstände, wie Äste oder Laub, an der Trennwand 102.13 zwischen den Vertiefungen 102.2 und 102.11 ansammeln können. Durch die geneigte Anordnung der Abdeckelemente 110.1 wird erreicht, dass sich durch die im Fahrbetrieb auftretende Luftströmung derartige Gegenstände gar nicht erst ansammeln können bzw. weggeweht werden.

Die vorliegende Erfindung wurde vorstehend ausschließlich im Zusammenhang mit einem Fahrzeug für einen Triebzug für den Hochgeschwindigkeitsverkehr beschrieben. Es versteht sich jedoch, dass die Erfindung auch im Zusammenhang mit anderen Arten von Schienenfahrzeugen, insbesondere mit anderen Nennbetriebsgeschwindigkeiten, zum Einsatz kommen kann.

## Patentansprüche

1. Schienenfahrzeug, insbesondere für den Hochgeschwindigkeitsverkehr, mit
- einem Wagenkasten (102), der einem Innenraum aufweist und eine Fahrzeuglängsrichtung, eine Fahrzeugquerrichtung sowie eine Fahrzeughöhenrichtung definiert, und
- einer Stromabnehmereinrichtung (104) zur Montage in einem Dachbereich des Wagenkastens (102), wobei
- die Stromabnehmereinrichtung (104) wenigstens eine elektrische Isolatoreinrichtung (104.3) aufweist, über welche die Stromabnehmereinrichtung (104) auf einer Dachstruktur (102.3) des Wagenkastens (102) abgestützt ist,
- zwischen der Isolatoreinrichtung (104.3) und der Dachstruktur (102.3) eine Schwingungsreduktionseinrichtung (106) angeordnet ist, die in der Fahrzeugquerrichtung und/oder der Fahrzeuglängsrichtung über die Isolatoreinrichtung (104.3) hinausragt, wobei
- die Schwingungsreduktionseinrichtung (106) zur Geräuschreduktion in dem Innenraum dazu ausgebildet ist, einen von der Stromabnehmereinrichtung (104) induzierten Eintrag von Schwingungen in die Dachstruktur (102.3) zu reduzieren,
- die Schwingungsreduktionseinrichtung (106) eine Trägereinrichtung (107.1) umfasst,
- die Isolatoreinrichtung (104.3) in wenigstens einem Isolatoranschlussbereich (107.6) auf der Trägereinrichtung (107.1) abgestützt ist und
- die Trägereinrichtung (107.1) über wenigstens eine Dachanschlusseinrichtung (107.4) in wenigstens einem Dachanschlussbereich (107.2) mit der Dachstruktur (102.3) des Wagenkastens (102) verbunden ist,
**dadurch gekennzeichnet, dass**
- die Trägereinrichtung (107.1) ohne Zwischenschaltung von Dämpfungselementen mit der Dachstruktur (102.3) des Wagenkastens (102) verbunden ist.

2. Schienenfahrzeug nach Anspruch 1, **dadurch gekennzeichnet, dass**
- die Isolatoreinrichtung (104.3) eine maximale Stützbreite in der Fahrzeugquerrichtung definiert und die Schwingungsreduktionseinrichtung (106) in der Fahrzeugquerrichtung eine maximale Breitenabmessung aufweist, die größer ist als die maximale Stützbreite, wobei die maximale Breitenabmessung insbesondere 105% bis 200% der maximalen Stützbreite beträgt, vorzugsweise 110% bis 170% der maximalen Stützbreite beträgt, weiter vorzugsweise 120% bis 150% der maximalen Stützbreite beträgt,
und/oder
- die Isolatoreinrichtung (104.3) eine maximale Stützlänge in der Fahrzeuglängsrichtung definiert und die Schwingungsreduktionseinrichtung (106) in der Fahrzeuglängsrichtung eine maximale Längenabmessung aufweist, die größer ist als die maximale Stützlänge, wobei die maximale Längenabmessung insbesondere 105% bis 500% der maximalen Stützlänge beträgt, vorzugsweise 150% bis 450% der maximalen Stützlänge beträgt, weiter vorzugsweise 300% bis 400% der maximalen Stützlänge beträgt.

3. Schienenfahrzeug nach Anspruch 1 oder 2, **dadurch gekennzeichnet, dass**
- die Schwingungsreduktionseinrichtung (106) dazu ausgebildet ist, einen von der Stromabnehmereinrichtung (104) induzierten Eintrag von Schwingungen in einem Frequenzbereich von 10 Hz bis 1000 Hz, vorzugsweise von 20 Hz bis 800 Hz, weiter vorzugsweise von 100 Hz bis 800 Hz, zu dämpfen,
und/oder
- die Schwingungsreduktionseinrichtung (106) eine Körperschallreduktionseinrichtung (107) aufweist, die dazu ausgebildet ist, einen von der Stromabnehmereinrichtung (104) induzierten Eintrag von Körperschall in die Dachstruktur (102.3) zu reduzieren,
und/oder
- die Schwingungsreduktionseinrichtung (106) eine Luftschallreduktionseinrichtung (108) aufweist, die dazu ausgebildet ist, einen von der Stromabnehmereinrichtung (104) induzierten Eintrag von Luftschall in die Dachstruktur (102.3) zu reduzieren.

4. Schienenfahrzeug nach einem der vorhergehenden Ansprüche, **dadurch gekennzeichnet, dass**
- die Trägereinrichtung (107.1) über wenigstens eine Dachmontageschiene (107.4) in dem wenigstens einem Dachanschlussbereich (107.2) mit der Dachstruktur (102.3) des Wagenkastens (102) verbunden ist,
und/oder
- die Trägereinrichtung (107.1) in der Fahrzeugquerrichtung und/oder der Fahrzeuglängsrichtung über die Isolatoreinrichtung (104.3) hinausragt, und/oder
- der Dachanschlussbereich (107.2) in der Fahrzeugquerrichtung weiter von einer Längsmittenebene des Wagenkastens (102) entfernt ist als ein angrenzender Isolatoranschlussbereich (107.6).

5. Schienenfahrzeug nach Anspruch 4, **dadurch gekennzeichnet, dass**
- außerhalb des Dachanschlussbereichs (107.2) in der Fahrzeughöhenrichtung ein erster Spalt, zwischen der Trägereinrichtung (107.1) und der Dachstruktur (102.3) ausgebildet ist,
wobei
- der erste Spalt insbesondere in der Fahrzeughöhenrichtung eine erste Spalthöhe aufweist, die 2 mm bis 20 mm beträgt, vorzugsweise 5 mm bis 15 mm beträgt, weiter vorzugsweise 8 mm bis 12 mm beträgt,
und/oder
- der erste Spalt insbesondere in der Fahrzeugquerrichtung eine erste Spaltbreite aufweist, die 40% bis 98%, vorzugsweise 60% bis 98%, weiter vorzugsweise 80% bis 98%, einer maximalen Querabmessung der Trägereinrichtung (107.1) in der Fahrzeugquerrichtung beträgt,
und/oder
- der erste Spalt insbesondere als Luftspalt ausgebildet ist
und/oder
- in dem ersten Spalt insbesondere wenigstens ein Schalldämmungselement und/oder wenigstens ein Schalldämpfungselement angeordnet ist.

6. Schienenfahrzeug nach Anspruch 4 oder 5, **dadurch gekennzeichnet, dass**
- die Trägereinrichtung (107.1) wenigstens einen Trägerrahmen umfasst, der den Dachanschlussbereich (107.2) und den Isolatoranschlussbereich (107.6) ausbildet,
wobei
- der Trägerrahmen (107.1) insbesondere leiterförmig ausgebildet ist
und/oder
- der Trägerrahmen (107.1) in der Fahrzeugquerrichtung insbesondere zwei seitliche Enden aufweist, an denen jeweils ein Dachanschlussbereich (107.2) ausgebildet ist,
und/oder
- der Trägerrahmen (107.1) in der Fahrzeugquerrichtung insbesondere in einem Mittenbereich den Isolatoranschlussbereich (107.6) ausbildet.
und/oder
- der Trägerrahmen (107.1) insbesondere eine Mehrzahl von Profilelementen, insbesondere Hohlprofilelemente, umfasst
und/oder
- der Trägerrahmen (107.1) insbesondere aus wenigstens einem Material aufgebaut ist, das Stahl umfasst.

7. Schienenfahrzeug nach einem der Ansprüche 4 bis 6, **dadurch gekennzeichnet, dass**
- die Trägereinrichtung (107.1) wenigstens ein Schwingungsreduktionselement (107.7; 107.8, 107.9) umfasst, welches dazu ausgebildet ist, einen von der Stromabnehmereinrichtung (104) induzierten Eintrag von Schwingungen in die Dachstruktur (102.3) zu reduzieren,
wobei
- das Schwingungsreduktionselement (107.7; 107.8) insbesondere in einen Kraftfluss zwischen der Isolatoreinrichtung (104.3) und der Dachstruktur (102.3) des Wagenkastens (102) geschaltet ist
und/oder
- das Schwingungsreduktionselement (107.7) insbesondere im Dachanschlussbereich (107.2) angeordnet ist
und/oder
- das Schwingungsreduktionselement (107.8, 107.9) insbesondere im Isolatoranschlussbereich (107.6) angeordnet ist
und/oder
- das Schwingungsreduktionselement (107.7; 107.8, 107.9) insbesondere aus wenigstens einem Material aufgebaut ist, das einen Kunststoff, insbesondere Gummi, umfasst.

8. Schienenfahrzeug nach einem der vorhergehenden Ansprüche, **dadurch gekennzeichnet, dass**
- die Schwingungsreduktionseinrichtung (106) eine Abschirmeinrichtung (108) für von der Stromabnehmereinrichtung (104) induzierten Luftschall umfasst,
wobei
- die Abschirmeinrichtung (108) zwischen der Isolatoreinrichtung (104.3) und der Dachstruktur (102.3) des Wagenkastens (102), insbesondere zwischen der Isolatoreinrichtung (104.3) und einer Trägereinrichtung (107.1) zur Montage der Stromabnehmereinrichtung (104) an der Dachstruktur (102.3), angeordnet ist, und/oder
- die Abschirmeinrichtung (108) in der Fahrzeugquerrichtung und/oder der
Fahrzeuglängsrichtung über die Isolatoreinrichtung (104.3) hinausragt
und/oder
- die Abschirmeinrichtung (108) über eine Mehrzahl von Schwingungsentkopplungselementen (108.2) auf der Dachstruktur (102.3) abgestützt ist.

9. Schienenfahrzeug nach Anspruch 8, **dadurch gekennzeichnet, dass**
- die Abschirmeinrichtung (108) ein im Wesentlichen plattenförmiges, insbesondere im Wesentlichen ebenes, Abschirmelement (108.3) umfasst, welches einer Oberseite der Dachstruktur (102.3) unter Ausbildung eines zweiten Spalts zugeordnet ist,
wobei
- der zweite Spalt insbesondere in der Fahrzeughöhenrichtung eine zweite Spalthöhe aufweist, die 40 mm bis 120 mm beträgt, vorzugsweise 60 mm bis 100 mm beträgt, weiter vorzugsweise 70 mm bis 90 mm beträgt, und/oder
- der zweite Spalt insbesondere als Luftspalt ausgebildet ist und/oder
- in dem zweiten Spalt insbesondere wenigstens ein Schalldämmungselement und/oder wenigstens ein Schalldämpfungselement angeordnet ist.

10. Schienenfahrzeug nach Anspruch 9, **dadurch gekennzeichnet, dass**
- die Abschirmeinrichtung (108) im Wesentlichen wannenförmig mit einem umlaufend an das Abschirmelement (108.3) angrenzenden, insbesondere in der Fahrzeughöhenrichtung nach oben weisenden, Randbereich (108.4) ausgebildet ist
und/oder
- das Abschirmelement (108.3) aus wenigstens einem Material aufgebaut ist, das Stahl umfasst.

11. Schienenfahrzeug nach einem der Ansprüche 8 bis 10, **dadurch gekennzeichnet, dass**
- die Stromabnehmereinrichtung (104) in einer Vertiefung (102.2) des Wagenkastens (102) angeordnet ist und
- die Vertiefung (102.2) zumindest abschnittsweise, insbesondere umlaufend, in der Fahrzeuglängsrichtung und/oder der Fahrzeugquerrichtung durch eine Begrenzung (102.5), insbesondere eine Begrenzungswand, begrenzt ist,
wobei
- die Abschirmeinrichtung (108) insbesondere zumindest abschnittsweise, vorzugsweise umlaufend, an die Begrenzung (102.5) unter Ausbildung eines schmalen dritten Spaltes heranreicht, dessen Spaltbreite 2 mm bis 20 mm beträgt, vorzugsweise 5 mm bis 15 mm beträgt, weiter vorzugsweise 8 mm bis 12 mm beträgt.

12. Schienenfahrzeug nach Anspruch 11, **dadurch gekennzeichnet, dass**
- die Begrenzung (102.5) der Vertiefung (102.2) in einem Randbereich der Vertiefung (102.2) am Übergang zu einer Außenhaut des Wagenkastens (102) in wenigstens einem gefasten Abschnitt (102.6, 102.7) nach Art einer Fase abgewinkelt ausgebildet ist, um eine definierte Strömungsabrisskante (102.8, 102.9) für eine die Außenhaut des Wagenkastens (102) überstreichende Luftströmung auszubilden, wobei
- der Randbereich der Vertiefung (102.2) einen vorderen Abschnitt (102.6) und einen hinteren Abschnitt (102.7) aufweist, die sich jeweils zumindest teilweise in der Fahrzeugquerrichtung zwischen zwei seitlichen Abschnitten (102.10) erstrecken, die sich jeweils in der Fahrzeuglängsrichtung erstrecken, und
- sich der wenigstens eine gefaste Abschnitt (102.6, 102.7) zumindest über 75%, vorzugsweise zumindest über 90%, weiter vorzugsweise über im Wesentlichen 100%, des vorderen Abschnitts (102.6) und/oder des hinteren Abschnitts (102.7) erstreckt.

13. Schienenfahrzeug nach Anspruch 11 oder 12, **dadurch gekennzeichnet, dass**
- die Stromabnehmereinrichtung (104) eine in die Vertiefung (102.2) eingefahrene Ruheposition aufweist, wobei
- die Stromabnehmereinrichtung (104) eine durch die Außenhaut (102.1) des Wagenkastens (102) definierte Hüllfläche in der Ruheposition in der Fahrzeughöhenrichtung um höchstens 90 mm, vorzugsweise höchstens 70 mm, weiter vorzugsweise höchstens 50 mm, überragt.

14. Schienenfahrzeug nach einem der vorhergehenden Ansprüche, **dadurch gekennzeichnet, dass** es für den Hochgeschwindigkeitsverkehr mit einer Nennbetriebsgeschwindigkeit oberhalb von 250 km/h, insbesondere oberhalb von 300 km/h, insbesondere von 320 km/h bis 390 km/h, ausgebildet ist.

15. Schwingungsreduktionseinrichtung, die zur Geräuschreduktion in einem Innenraum eines Schienenfahrzeugs dazu ausgebildet ist, einen von einer Stromabnehmereinrichtung (104) induzierten Eintrag von Schwingungen in eine Dachstruktur (102.3) des Schienenfahrzeugs (101) zu reduzieren, **dadurch gekennzeichnet, dass** sie als die Schwingungsreduktionseinrichtung (106) eines Schienenfahrzeugs (101) nach einem der vorhergehenden Ansprüche ausgebildet ist.

## Claims

1. Rail vehicle, in particular for high-speed traffic, comprising
- a wagon body (102) having an interior space and defining a vehicle longitudinal direction, a vehicle transverse direction and a vehicle height direction, and
- a pantograph device (104) for mounting in a roof area of said wagon body (102), wherein
- said pantograph device (104) has at least one electrical insulator device (104.3) via which said pantograph device (104) is supported on a roof structure (102.3) of said wagon body (102),
- between said insulator device (104.3) and said roof structure (102.3) a vibration reduction device (106) is arranged, which protrudes in said vehicle transverse direction and/or said vehicle longitudinal direction beyond said insulator device (104.3), wherein
- said vibration reduction device (106), for noise reduction in said interior space, is configured to reduce an introduction of vibrations into said roof structure (102.3) induced by said pantograph device (104),
- said vibration reduction device (106) comprises a support device (107.1),
- said insulator device (104.3) is supported on said support device (107.1) in at least one insulator connection area (107.6), and
- said support device (107.1) is connected to said roof structure (102.3) of said wagon body (102) via at least one roof connection device (107.4) in at least one roof connection area (107.2),
**characterized in that**
- said support device (107.1) is connected to said roof structure (102.3) of said wagon body (102) without interposition of damping elements.

2. Rail vehicle according to claim 1, **characterized in that**
- said insulator device (104.3) defines a maximum support width in said vehicle transverse direction and said vibration reduction device (106) has a maximum width dimension in said vehicle transverse direction, which is greater than said maximum support width, wherein said maximum width dimension in particular is 105% to 200% of said maximum support width, preferably 110% to 170% of said maximum support width, more preferably 120% to 150% of said maximum support width,
and/or
- said isolator device (104.3) defines a maximum support length in said vehicle longitudinal direction and said vibration reduction device (106) has a maximum length dimension in said vehicle longitudinal direction, which is greater than said maximum support length, wherein said maximum length dimension in particular is 105% to 500% of said maximum support length, preferably 150% to 450% of said maximum support length, more preferably 300% to 400% of said maximum support length.

3. Rail vehicle according to claim 1 or 2, **characterized in that**
- said vibration reduction device (106) is configured to dampen an entry of vibrations induced by said pantograph device (104) in a frequency range from 10 Hz to 1000 Hz, preferably from 20 Hz to 800 Hz, more preferably from 100 Hz to 800 Hz,
and/or
- said vibration reduction device (106) has a structure-borne noise reduction device (107), which is configured to reduce an entry of structure-borne noise into said roof structure (102.3) induced by said pantograph device (104),
and/or
- said vibration reduction device (106) has an air-borne sound reduction device (108), which is configured to reduce an entry of air-borne noise into said roof structure (102.3) induced by said pantograph device (104).

4. Rail vehicle according to one of the preceding claims, **characterized in that**
- said support device (107.1) is connected, in said at least one roof connection area (107.2), to said roof structure (102.3) of said wagon body (102) via at least one roof mounting rail (107.4),
and/or
- said support device (107.1) protrudes in said vehicle transverse direction and/or said vehicle longitudinal direction beyond said insulator device (104.3),
and/or
- said roof connection area (107.2), in said vehicle transverse direction, is located further away from a longitudinal center plane of said wagon body (02) than an adjacent insulator connecting area (107.6).

5. Rail vehicle according to claim 4, **characterized in that**
- external to said roof connection area (107.2), in said vehicle height direction, a first gap is formed between said support device (107.1) and said roof structure (102.3),
wherein
- said first gap, in particular, in said vehicle height direction, has a first gap height which is 2 mm to 20 mm, preferably 5 mm to 15 mm, more preferably 8 mm to 12 mm,
and/or
- said first gap, in particular, in said vehicle transverse direction, has a first gap width which is 40% to 98%, preferably 60% to 98%, more preferably 80% to 98%, of a maximum transverse dimension of said support device (107.1) in said vehicle transverse direction,
and/or
- said first gap is formed, in particular, as an air gap,
and/or
- in said first gap, in particular, at least one sound-insulating element and/or at least one sound-damping element is arranged.

6. Rail vehicle according to claim 4 or 5, **characterized in that**
- said support device (107.1) comprises at least one support frame, which forms said roof connection area (107.2) and said insulator connection area (107.6),
wherein
- said support frame (107.1) in particular is configured to be ladder-shaped, and/or
- said support frame (107.1), in said vehicle transverse direction, in particular has two lateral ends, on each of which a roof connection area (107.2) is formed,
and/or
- said support frame (107.1), in said vehicle transverse direction, in particular, forms said insulator connection area (107.6) in a central area,
and/or
- said support frame (107.1) in particular comprises a plurality of profile elements, in particular hollow profile elements,
and/or
- said support frame (107.1) is constructed in particular of at least one material comprising steel.

7. Rail vehicle according to one of claims 4 to 6, **characterized in that**
- said support device (107.1) comprises at least one vibration reduction element (107.7; 107.8, 107.9), which is configured to reduce an entry of vibrations into said roof structure (102.3) induced by said pantograph device (104),
wherein
- said vibration reduction element (107.7; 107.8), in particular, is connected in a force flow between said insulator device (104.3) and said roof structure (102.3) of said wagon body (102),
and/or
- said vibration reduction element (107.7), in particular, is arranged in said roof connection area (107.2),
and/or
- said vibration reduction element (107.8, 107.9), in particular, is arranged in said insulator connection area (107.6),
and/or
- said vibration reduction element (107.7; 107.8, 107.9), in particular, is constructed of at least one material comprising a plastic, in particular rubber.

8. Rail vehicle according to one of the preceding claims, **characterized in that**
- said vibration reduction device (106) comprises a shielding device (108) for air-borne sound induced by said pantograph device (104),
wherein
- said shielding device (108) is arranged between said isolator device (104.3) and said roof structure (102.3) of said wagon body (102), in particular between said isolator device (104.3) and a support device (107.1) for mounting said pantograph device (104) to said roof structure (102.3),
and/or
- said shielding device (108), in said vehicle transverse direction and/or said vehicle longitudinal direction, protrudes beyond said isolator device (104.3),
and/or
- said shielding device (08) is supported on said roof structure (102.3) via a plurality of vibration decoupling elements (108.2).

9. Rail vehicle according to claim 8, **characterized in that**
- said shielding device (108) comprises a substantially plate-shaped, in particular substantially planar, shielding element (108.3) which is associated with a top of said roof structure (102.3) under the formation of a second gap,
wherein
- said second gap, in particular, in said vehicle height direction, has a second gap height, which is 40 mm to 120 mm, preferably 60 mm to 100 mm, more preferably 70 mm to 90 mm,
and/or
- said second gap, in particular, is formed as an air gap,
and/or
- in said second gap, in particular, at least one sound-insulating element and/or at least one sound-damping element is arranged.

10. Rail vehicle according to claim 9, **characterized in that**
- said shielding device (108) is substantially configured tub-shaped with an edge area (108.4) peripherally adjacent to said shielding element (108.3) and, in particular protruding upward in said vehicle height direction,
and/or
- said shielding element (108.3) is constructed of at least one material comprising steel.

11. Rail vehicle according to one of claims 8 to 10, **characterized in that**
- said pantograph device (104) is arranged in a recess (102.2) of said wagon body (102), and
- said recess (102.2) at least partially, in particular circumferentially, in said vehicle longitudinal direction and/or said vehicle transverse direction, is limited by a boundary (102.5), in particular a boundary wall,
wherein
- said shielding device (108), in particular, at least section-wise, preferably circumferentially, reaches said boundary (102.5) under the formation of a narrow third gap, whose gap width is 2 mm to 20 mm, preferably 5 mm to 15 mm, more preferably 8 mm to 12 mm.

12. Rail vehicle according to claim 11, **characterized in that**
- said boundary (102.5) of said recess (102.2), in an edge area of said recess (102.2) at the transition to an outer skin of said wagon body (102), in at least one chamfered section (102.6, 102.7), is formed angled in the manner of a chamfer to configure a defined flow separation edge (102.8, 102.9) for the airflow sweeping over the outer skin of said wagon body (102), wherein
- said edge area of said recess (102.2) has a front portion (102.6) and a rear portion (102.7) each extending at least partially in said vehicle transverse direction between two lateral portions (102.10) each extending in the vehicle longitudinal direction, and
- said at least one chamfered section (102.6. 102.7) ranges over at least over 75%, preferably over at least 90%, more preferably over substantially 100%, of said front portion (102.6) and/or said rear portion (102.7).

13. Rail vehicle according to claim 11 or 12, **characterized in that**
- said pantograph device (104) has a rest position retracted into said recess (102.2),
wherein
- said pantograph device (104), in said rest position, protrudes from an enveloping surface defined by said outer skin (102.1) of said wagon body (102) in said vehicle height direction, by at most 90 mm, preferably at most 70 mm, more preferably at most 50 mm.

14. Rail vehicle according to one of the preceding claims, **characterized in that** it is configured for high-speed traffic at an operating speed above 250 km/h, in particular above 300 km/h, in particular from 320 km/h to 390 km/h.

15. Vibration reduction device, which is configured for noise reduction in an interior space of a rail vehicle, to reduce an entry of vibrations into a roof structure (102.3) of said rail vehicle (101) induced by said pantograph device (104), **characterized in that** it is formed as the vibration reduction device (106) of a rail vehicle (101) according to one of the preceding claims.

## Revendications

1. Véhicule ferroviaire, en particulier pour la circulation à grande vitesse, comprenant
- une caisse de véhicule (102) ayant un espace intérieur et définissant une direction longitudinale du véhicule, une direction transversale du véhicule et une direction de hauteur du véhicule, et
- un dispositif pantographe (104) destiné à être monté dans une zone de toit de la caisse (102), dans lequel
- le dispositif pantographe (104) présente au moins un dispositif isolant électrique (104.3) par lequel le dispositif pantographe (104) est supporté sur une structure de toit (102.3) de la caisse (102),
- entre le dispositif isolant (104.3) et la structure de toit (104) 102.3) un dispositif de réduction de vibration (106) est agencé et fait saillie dans la direction transversale du véhicule et/ou la direction longitudinale du véhicule au-delà du dispositif isolant électrique (104.3), dans lequel
- le dispositif de réduction de vibration (106), pour la réduction du bruit dans l'espace intérieur, est adapté pour réduire l'entrée de vibrations induites par le dispositif pantographe (104) dans la structure du toit (102.3),
- le dispositif de réduction de vibration (106) comprend un dispositif porteur (107.1),
- le dispositif isolateur (104.3) est supporté dans au moins une région de liaison d'isolateur (107.6) sur le dispositif porteur (107.1) et
- le dispositif porteur (107.1) est relié à la structure de toit (102.3) de la caisse de véhicule (102) par au moins un dispositif de liaison au toit (107.4) dans au moins une région de liaison au toit (107.2),
**caractérisé en ce que**
- le dispositif porteur (107.1) est relié à la structure de toit (102.3) de la caisse de véhicule (102) sans interposition d'éléments d'amortissement.

2. Véhicule ferroviaire selon la revendication 1, **caractérisé en ce que**
- le dispositif isolant (104.3) définit une largeur de support maximale dans la direction transversale du véhicule et le dispositif de réduction de vibration (106) a une dimension en largeur maximale dans la direction transversale du véhicule, qui est supérieure à la largeur de support maximale, la dimension en largeur maximale étant notamment de 105 % à 200% de la largeur de support maximale, de préférence de 110% à 170% de la largeur de support maximale, plus préférablement de 120% à 150% de la largeur de support maximale, et/ou
- le dispositif isolateur (104.3) définit une longueur de support maximale dans la direction longitudinale du véhicule et le dispositif de réduction de vibration (106) a une dimension de longueur maximale dans la direction longitudinale du véhicule qui est supérieure à la longueur de support maximale, la dimension de longueur maximale étant notamment de 105% à 500% de la longueur de support maximale, de préférence de 150% à 450% de la longueur de support maximale, de manière davantage préférée de 300% à 400% de la longueur de support maximale.

3. Véhicule ferroviaire selon la revendication 1 ou 2, **caractérisé en ce que**
- le dispositif de réduction de vibration (106) est conçu pour amortir une entrée de vibrations induites par le dispositif pantographe (104) dans une plage de fréquences allant de 10 Hz à 1000 Hz, de préférence de 20 Hz à 800 Hz, plus préférablement de 100 Hz à 800 Hz,
et/ou
- le dispositif de réduction de vibration (106) comporte un dispositif de réduction de bruit de structure (107) conçu pour réduire une entrée de bruit structurel dans la structure de toit (102.3) induite par le dispositif pantographe (104) et/ou
- le dispositif de réduction de vibration (106) présente un dispositif de réduction de bruit aérien (108) conçu pour réduire une entrée de bruit aérien dans la structure de toit (102.3) induite par le dispositif pantographe (104).

4. Véhicule ferroviaire selon l'une quelconque des revendications précédentes, **caractérisé en ce que**
- le dispositif porteur (107.1) est relié à la structure de toit (102.3) de la caisse (102) par au moins un rail de montage de toit (107.4) dans l'au moins une région de liaison au toit (107.2),
et/ou
- le dispositif porteur (107.1) fait saillie dans la direction transversale du véhicule et/ou dans la direction longitudinale du véhicule au-delà du dispositif isolant (104.3),
et/ou
- la région de liaison au toit (107.2), dans la direction transversale du véhicule, est plus éloignée d'un plan médian longitudinal de la caisse de véhicule (102) qu'une région de liaison d'isolateur (107.6) adjacente.

5. Véhicule ferroviaire selon la revendication 4, **caractérisé en ce que**
- à l'extérieur de la région de liaison au toit (107.2), dans le sens de la hauteur du véhicule, un premier interstice est formé entre le dispositif de support (107.1) et la structure de toit (102.3),
dans lequel
- le premier interstice, en particulier, dans le sens de la hauteur du véhicule, a une première hauteur d'interstice qui est de 2 à 20 mm, de préférence de 5 à 15 mm, plus préférablement de 8 à 12 mm,
et/ou
- le premier interstice, en particulier, dans le sens transversal du véhicule, présente une première largeur d'interstice de 40% à 98%, de préférence de 60% à 98%, plus préférablement de 80% à 98%, d'une dimension transversale maximale du dispositif de support (107.1) dans la direction transversale du véhicule,
et/ou
- le premier interstice est formé notamment sous la forme d'un interstice d'air
et/ou
- dans le premier interstice, notamment, au moins un élément d'insonorisation et/ou au moins un élément d'atténuation acoustique est disposé.

6. Véhicule ferroviaire selon la revendication 4 ou 5, **caractérisé en ce que**
- le dispositif porteur (107.1) comprend au moins un cadre porteur formant la région de liaison de toit (107.2) et la région de liaison d'isolateur (107.6),
dans lequel
- le cadre porteur (107.1) est notamment en forme d'échelle et/ou
- le cadre porteur (107.1), dans le sens transversal du véhicule, présente notamment deux extrémités latérales à chacune desquelles est formée une région de liaison au toit (107.2)
et/ou
- le cadre porteur (107.1), dans le sens transversal du véhicule, en particulier forme la région de liaison d'isolateur (107.6) dans une région centrale et/ou
- le cadre porteur (107.1) en particulier comprend une pluralité d'éléments de profilés, en particulier des éléments de profilés creux,
et/ou
- le cadre porteur (107.1) notamment est constitué d'au moins un matériau comprenant de l'acier.

7. Véhicule ferroviaire selon l'une quelconque des revendications 4 à 6, **caractérisé en ce que**
- le dispositif porteur (107.1) comprend au moins un élément de réduction de vibration (107.7; 107.8, 107.9) adapté pour réduire une entrée de vibrations dans la structure de toit (102.3) induite par le dispositif pantographe (104),
dans lequel
- l'élément de réduction de vibration (107.7; 107.8) en particulier est agencé dans un flux de force entre le dispositif isolant (104.3) et la structure de toit (102.3) de la caisse de véhicule (102)
et/ou
- l'élément de réduction de vibration (107.7) en particulier est agencé dans la région de liaison au toit (107.2)
et/ou
- l'élément de réduction de vibration (107.8, 107.9) en particulier est agencé dans la région de liaison d'isolateur (107.6)
et/ou
- l'élément de réduction de vibration (107.7; 107.8, 107.9) notamment est constitué d'au moins un matériau comprenant une matière plastique, notamment du caoutchouc.

8. Véhicule ferroviaire selon l'une quelconque des revendications précédentes, **caractérisé en ce que**
- le dispositif de réduction de vibration (106) comprend un dispositif écran (108) pour le bruit aérien émis par le dispositif pantographe (104),
dans lequel
- le dispositif écran (108) est situé entre le dispositif isolateur (104.3) et la structure de toit (102.3) de la caisse de véhicule (102). en particulier entre le dispositif isolateur (104.3) et un dispositif porteur (107.1) pour monter le dispositif pantographe (104) sur la structure de toit (102.3),
et/ou
- le dispositif écran (108), dans la direction transversale du véhicule et/ou dans la direction longitudinale du véhicule, fait saillie par rapport au dispositif isolateur (104.3)
et/ou
- le dispositif écran (108) est supporté sur la structure de toit (102.3) par l'intermédiaire d'une pluralité d'éléments de découplage de vibration (108.2).

9. Véhicule ferroviaire selon la revendication 8, **caractérisé en ce que**
- le dispositif écran (108) comprend un élément écran (108.3) sensiblement en forme de plaque, en particulier sensiblement plane, qui est associé à la face supérieure de la structure de toit (102.3) pour former un deuxième interstice,
dans lequel
- le deuxième interstice, en particulier, dans le sens de la hauteur du véhicule, a une deuxième hauteur de 40 mm à 20 mm, de préférence de 60 mm à 100 mm, et plus préférentiellement de 70 mm à 90 mm,
et/ou
- le deuxième interstice est formé notamment sous la forme d'un interstice d'air
et/ou
- dans le deuxième interstice, notamment, au moins un élément d'insonorisation et/ou au moins un élément d'atténuation acoustique est disposé.

10. Véhicule ferroviaire selon la revendication 9, **caractérisé en ce que**
- le dispositif écran (108) est sensiblement en forme de cuvette avec une region périphérique adjacente et circonférentielle à l'élément écran (108.3), en particulier faisant saillie dans la direction de hauteur du véhicule (108.4)
et/ou
- l'élément écran (108.3) est constitué d'au moins un matériau comprenant de l'acier.

11. Véhicule ferroviaire selon l'une quelconque des revendications 8 à 10, **caractérisé en ce que**
- le dispositif pantographe (104) est disposé dans un évidement (102.2) de la caisse du véhicule (102) et
- l'évidement (102.2) au moins partiellement, en particulier circonférentiellement, dans la direction longitudinale du véhicule et/ou la direction transversale du véhicule est limitée par une limite (102.5), en particulier une paroi de délimitation,
dans lequel
- le dispositif écran (108) atteint en particulier au moins partiellement, de préférence circonférentiellement, la limite (102.5) formant un troisième interstice étroit dont la largeur d'interstice est de 2 mm à 20 mm, de préférence de 5 mm à 15 mm, plus préférablement de 8 mm à 12 mm.

12. Véhicule ferroviaire selon la revendication 11, **caractérisé en ce que**
- la limite (102.5) de l'évidement (102.2), dans une région de bord de l'évidement (102.2) au passage vers une peau extérieure de la caisse de véhicule (102), dans au moins une section chanfreinée (102.6, 102.7) est formée anglée de manière d'un chanfrein pour former une arête de décrochage de flux d'air définie (102.8, 102.9) pour un flux d'air balayant la peau extérieure de la caisse de véhicule (102), dans lequel
- la région de bord de l'évidement (102.2) présente une partie avant (102.6) et une partie arrière (102.7) chacune s'étendant au moins partiellement dans la direction transversale du véhicule entre deux parties latérales (102.10) s'étendant chacune dans la direction longitudinale du véhicule, et
- la au moins une section chanfreinée (102.6. 102.7) s'étend au moins sur plus de 75%, de préférence sur au moins au-dessus de 90%, plus préférablement sur sensiblement 100%, de la partie avant (102.6) et/ou de la partie arrière (102.7).

13. Véhicule ferroviaire selon la revendication 11 ou 12, **caractérisé en ce que**
- le dispositif pantographe (104) a une position de retrait retirée dans l'évidement (102.2), dans lequel
- le dispositif pantographe (104), dans la position de retrait, fait saillie dans le sens de la hauteur du véhicule par rapport à une enveloppe définie par la peau extérieure (102.1) de la caisse de véhicule (102) par au plus 90 mm, de préférence par au plus 70 mm, mieux encore par au plus 50 mm.

14. Véhicule ferroviaire selon l'une quelconque des revendications précédentes, **caractérisé en ce qu'**il est conçu pour le trafic à grande vitesse à une vitesse nominale de fonctionnement supérieure à 250 km/h, en particulier supérieure à 300 km/h, en particulier de 320 km/h à 390 km/h.

15. Dispositif de réduction de vibration conçu pour réduire le bruit dans un espace intérieur d'un véhicule ferroviaire afin de réduire une entrée de vibrations induites dans une structure de toit (102.3) du véhicule ferroviaire (101) par un dispositif pantographe (104), **caractérisé en ce qu'**il es formé comme le dispositif de réduction de vibration (106) d'un véhicule ferroviaire (101) selon l'une quelconque des revendications précédentes.
